(19) Europäisches Patentamt
European Patent Office
Office européen des brevets

(11) **EP 4 011 840 A1**

(12) **EUROPÄISCHE PATENTANMELDUNG**

(43) Veröffentlichungstag:
**15.06.2022 Patentblatt 2022/24**

(21) Anmeldenummer: **20212770.0**

(22) Anmeldetag: **09.12.2020**

(51) Internationale Patentklassifikation (IPC):
**C03B 37/012** (2006.01)    **C03B 23/207** (2006.01)

(52) Gemeinsame Patentklassifikation (CPC):
**C03B 37/0122; C03B 23/207;** C03B 2203/14;
C03B 2203/16; C03B 2203/42

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Heraeus Quarzglas GmbH & Co. KG
63450 Hanau (DE)**

(72) Erfinder:
• **ROSENBERGER, Manuel
63450 Hanau (DE)**

• **PLASS, Jaqueline
63450 Hanau (DE)**
• **TANSEL, Yusuf
63450 Hanau (DE)**
• **WERNER, Jörg
63450 Hanau (DE)**

(74) Vertreter: **Heraeus IP
Heraeus Business Solutions GmbH
Intellectual Property
Heraeusstraße 12-14
63450 Hanau (DE)**

(54) **VERFAHREN ZUR HERSTELLUNG EINER VORFORM EINER ANTIRESONANTEN-HOHLKERNFASER**

(57)     Die Erfindung betrifft ein Verfahren zur Herstellung einer Vorform einer Antiresonanten-Hohlkernfaser (2400), mit den Verfahrensschritten

a) Bereitstellen (1000) eines Hüllrohres (200), das eine Hüllrohr-Innenbohrung (220) und eine Hüllrohr-Längsachse (230) aufweist, entlang der sich eine von einer Innenseite (215) und einer Außenseite (216) begrenzte Hüllrohr-Wandung (210) erstreckt,

b) Vorbereiten (1200) einer Anzahl von Antiresonanzelement-Vorformlingen (300), die aus mehreren, miteinander verschachtelten rohrförmigen Strukturelementen zusammengesetzt sind, umfassend ein ARE-Außenrohr (310) und ein darin eingesetztes ARE-Innenrohr (320), wobei die Strukturelemente eine Strukturelemente-Längsachse aufweisen,

c) Anordnen (1300) der Antiresonanzelement-Vorformlinge (300) an der Innenseite der Hüllrohr-Wandung (210), und

d) Thermisches Fixieren (1500) der Antiresonanzelement-Vorformlinge (300) an der Hüllrohr-Wandung (210) durch Wärmeintrag.

Erfindungsgemäß ist vorgesehen, dass das Verfahren den Schritt aufweist

e) derartiges Einbringen (1400) von jeweils einem Kontaktelement (400) in mindestens einem Antiresonanzelement-Vorformling (300), dass das Kontaktelement (400) in Schritt d) die wärmeaufnehmende Masse des Antiresonanzelement-Vorformlings (300) erhöht, um beim thermischen Fixieren (1500) einen Wärmefluss aus dem Hüllrohr (200) in den Antiresonanzelement-Vorformling (300) zu verlangsamen.

Figur 4

EP 4 011 840 A1

**Beschreibung**

Hintergrund der Erfindung

Die Erfindung betrifft Verfahren zur Herstellung einer Vorform einer Antiresonanten-Hohlkernfaser.

Stand der Technik

Herkömmliche Monomode-Lichtleitfasern aus Vollmaterial haben einen Kernbereich aus Glas, der von einem Mantelbereich aus Glas mit niedrigerem Brechungsindex umgeben ist. Die Lichtleitung beruht dabei auf Totalreflexion zwischen Kern- und Mantelbereich. Die Wechselwirkungen des geführten Lichtes mit dem Vollmaterial sind jedoch mit einer erhöhten Latenz bei der Datenübertragung und relativ niedrigen Schädigungsschwellen gegenüber energiereicher Strahlung verbunden.

Diese Nachteile vermeiden oder verringern "Hohlkernfasern", bei denen der Kern einen evakuierten, mit Gas oder Flüssigkeit gefüllten Hohlraum umfasst. In Hohlkernfasern ist die Wechselwirkung des Lichtes mit dem Glas geringer als in Vollkernfasern. Der Brechungsindex des Kerns ist kleiner als der des Mantels, so dass eine Lichtleitung durch Totalreflexion nicht möglich ist und das Licht normalerweise aus dem Kern in den Mantel entweichen würde. In Abhängigkeit vom physikalischen Mechanismus der Lichtleitung werden Hohlkernfasern unterteilt in "photonische Bandlückenfasern" und "Antiresonanz-Reflexionsfaser".

Bei "photonischen Bandlückenfasern" ist der hohle Kernbereich von einem Mantel umgeben, in dem kleine Hohlkanäle periodisch angeordnet sind. Die periodische Struktur im Mantel bewirkt den in Anlehnung an die Halbleitertechnologie als "photonische Bandlücke" bezeichneten Effekt, wonach an den Mantelstrukturen gestreutes Licht bestimmter Wellenlängenbereiche aufgrund von Braggreflexion im zentralen Hohlraum konstruktiv interferiert und sich nicht transversal im Mantel ausbreiten kann.

Bei der als "Antiresonante-Hohlkernfaser" ("antiresonant hollow-core fiber"; ARHCF) bezeichneten Ausführungsform der Hohlkernfaser ist der hohle Kernbereich von einem inneren Mantelbereich umgeben, in dem sogenannte "antiresonante Elemente" (oder "Antiresonanzelemente"; kurz: "AREs") angeordnet sind. Die um den Hohlkern gleichmäßig verteilten Wandungen der Antiresonanzelemente können als in Antiresonanz betriebene Fabry-Perot-Kavitäten wirken, die das auftreffende Licht reflektieren und durch den Faserkern leiten.

Diese Fasertechnologie verspricht eine niedrige optische Dämpfung, ein sehr breites Transmissionsspektrum (auch im UV- oder IR-Wellenlängenbereich) und eine geringe Latenz bei der Datenübertragung.

Potentielle Anwendungen der Hohlkernfasern liegen auf dem Gebiet der Datenübertragung, der Hochleistungsstrahlführung, beispielsweise zur Materialbearbeitung, der Modalfilterung, der nichtlinearen Optik, insbesondere zur Superkontinuumserzeugung, vom ultravioletten bis infraroten Wellenlängenbereich.

Ein Nachteil Antiresonanter Hohlkernfasern liegt darin, dass Moden höherer Ordnung nicht zwangsläufig unterdrückt werden, so dass sie über große Übertragungslängen häufig nicht rein einmodig sind und sich die Qualität des Ausgangsstrahls verschlechtert.

Im Paper von Francesco Poletti "Nested antiresonant nodeless hollow core fiber"; Optics Express, Vol. 22, No. 20 (2014); DOI: 10.1364/OE 22.023807, wird ein Faserdesign vorgeschlagen, bei dem Antiresonanzelemente nicht als einfaches singuläres Strukturelement ausgebildet sind, sondern sich aus mehreren, miteinander verschachtelten (englisch: nested) Strukturelementen zusammensetzen. Die verschachtelten Antiresonanzelemente sind so ausgelegt, dass Kernmoden höherer Ordnung phasenangepasst an die Mantelmoden sind und unterdrückt werden, aber nicht die fundamentale Kernmode. Dadurch ist die Ausbreitung der fundamentalen Kernmode stets gewährleistet und die Hohlkernfaser kann über einen begrenzten Wellenlängenbereich effektiv einmodig gemacht werden.

Die effektive Modenunterdrückung hängt von der Mittenwellenlänge des übertragenen Lichts und von Strukturparametern des Faserdesigns ab, wie dem Radius des Hohlkerns und der Durchmesserdifferenz von verschachtelten Ringstrukturen in den Antiresonanzelementen.

Aus der EP 3 136 143 A1 ist eine Antiresonante-Hohlkernfaser bekannt (dort bezeichnet als "Hohlkernfaser ohne Bandlücke"), bei der der Kern neben der Fundamentalmode noch weitere Moden leiten kann. Zu diesem Zweck ist er von einem inneren Mantel mit "nicht-resonanten Elementen" umgeben, die eine Phasenanpassung von antiresonanten Moden mit den höheren Moden liefern. Die Herstellung der Hohlkernfaser erfolgt nach einer sogenannten "stack-anddraw-Technik", indem die Ausgangselemente zu einem achsenparallelen Ensemble angeordnet und zu einer Vorform fixiert werden und die Vorform anschließend elongiert wird. Hierbei wird ein Hüllrohr mit hexagonalem Innenquerschnitt verwendet und in den Innenkanten des Hüllrohres werden sechs sogenannte "ARE-Vorformen" (Anti-Resonanz-Element-Vorformen) fixiert. Diese Vorform wird in zwei Stufen zu einer Hohlkernfaser ausgezogen.

Aus der WO 2018/169487 A1 ist ein Verfahren zur Herstellung einer Vorform für Antiresonante-Hohlkernfasern bekannt, bei dem ein erster Mantelbereich eine Vielzahl an Stäben und ein zweiter Mantelbereich eine Vielzahl von Rohren umfasst, die von einem äußeren Hüllrohr umgeben sind. Stäbe, Rohre und Hüllrohr werden mittels "Stack and draw"-Technik zur Bildung einer Vorform zusammengefügt. Vor dem Elongieren der Vorform wird das Vorformende versiegelt, was durch Aufbringen einer Siegelmasse geschieht. Als Siegelmasse wird beispielsweise ein UV-Kleber eingesetzt.

Technische Aufgabenstellung

Antiresonante-Hohlkernfasern und insbesondere solche mit verschachtelten Strukturelementen haben komplexe Innengeometrien, was ihre exakte und reproduzierbare Herstellung erschwert. Dies gilt umso mehr, da zur Einhaltung der Resonanz- beziehungsweise Antiresonanzbedingungen bereits geringe Maßabweichungen in der Größenordnung der Arbeitswellenlänge des zu führenden Lichts nicht tolerierbar sind. Abweichungen von der Soll-Geometrie können ihre Ursache bei der Konfiguration der Faser-Vorform haben, und sie können auch durch ungewollte nicht-maßstäbliche Verformungen beim Faserziehprozess auf-treten.

Bei der bekannten "Stack-and-Draw"-Technik sind viele Elemente positionsgenau zusammenzufügen. Beispielsweise müssen zur Herstellung bekannter Hohlkernfaser im "NANF"-Design sechs Antiresonanzelemente, jeweils bestehend aus einem Rohr und einseitig an der Rohrinnenwand eingeschweißter Kapillare an der Innenwand eines Hüllrohres angebracht werden.

Zur Realisierung geringer Dämpfungswerte und breiter Transmissionsbereiche ist neben einer gleichmäßigen Wandstärke der Wandungen der Antiresonanzelemente auch die azimutale Position der Antiresonanzelemente innerhalb des Hüllrohres wichtig. Dies ist mit der "Stack- and-Draw"-Technik nicht ohne Weiteres zu realisieren.

Ziel der Erfindung ist es, ein Verfahren zur kostengünstigen Herstellung einer Antiresonanten-Hohlkernfaser anzugeben, das Beschränkungen herkömmlicher Herstellungsverfahren vermeidet.

Ein weiteres Ziel der Erfindung ist ein Verfahren zur offenbaren, das großvolumige Herstellung von Antiresonanten-Hohlkernfasern ermöglicht.

Insbesondere ist es Ziel der Erfindung, ein Verfahren zur Herstellung einer Vorform für Antiresonante-Hohlkernfasern bereitzustellen, mit dem reproduzierbar eine hohe Präzision der Strukturelemente und eine exakte Positionierung der Antiresonanzelemente in einer ausreichend stabilen und reproduzierbaren Weise erreicht werden kann.

Dabei sollen Nachteile der klassischen "Stack and Draw"-Technik, mit der die erforderlichen Strukturgenauigkeiten, insbesondere eine exakte Positionierung an vorgegebenen azimutalen Positionen nicht einfach zu erreichen ist, möglichst vermieden werden.

Bevorzugte Ausführungsformen der Erfindung

Ein Beitrag zur mindestens teilweisen Erfüllung mindestens einer der zuvor genannten Aufgaben wird durch die Merkmale der unabhängigen Ansprüche geleistet. Die abhängigen Ansprüche stellen bevorzugte Ausführungsformen bereit, die zur mindestens teilweisen Erfüllung mindestens einer der Aufgaben beitragen.

|1.| Verfahren zur Herstellung einer Vorform einer Antiresonanten-Hohlkernfaser, mit den Verfahrensschritten

a) Bereitstellen eines Hüllrohres, das eine Hüllrohr-Innenbohrung und eine Hüllrohr-Längsachse aufweist, entlang der sich eine von einer Innenseite und einer Außenseite begrenzte Hüllrohr-Wandung erstreckt,
b) Vorbereiten einer Anzahl von Antiresonanzelement-Vorformlingen, die aus mehreren, miteinander verschachtelten rohrförmigen Strukturelementen zusammengesetzt sind, umfassend ein ARE-Außenrohr und ein darin eingesetztes ARE-Innenrohr, wobei die Strukturelemente eine Strukturelemente-Längsachse aufweisen,
c) Anordnen der Antiresonanzelement-Vorformlinge an der Innenseite der Hüllrohr-Wandung, und
d) Thermisches Fixieren der Antiresonanzelement-Vorformlinge an der Hüllrohr-Wandung durch Wärmeintrag,
dadurch gekennzeichnet, dass das Verfahren den Schritt aufweist
e) derartiges Einbringen von jeweils einem Kontaktelement in mindestens einem Antiresonanzelement-Vorformling, dass
das Kontaktelement in Schritt d) die wärmeaufnehmende Masse des Antiresonanzelement-Vorformlings erhöht, um beim thermischen Fixieren einen Wärmefluss aus dem Hüllrohr in den Antiresonanzelement-Vorformling zu verlangsamen.

|2.| Verfahren nach Ausführungsform 1 **dadurch gekennzeichnet, dass** der Schritt e) die sequenziellen Schritte umfasst:

/A-1./ Verbinden des Kontaktelements mit dem Antiresonanzelement-Vorformling,
/A-2./ Verbinden des Antiresonanzelement-Vorformlings mit dem Hüllrohr.

|3.| Verfahren nach einem der vorhergehenden Ausführungsformen **dadurch gekennzeichnet, dass** der Schritt e) die sequenziellen Schritte umfasst:

/B-1./ Wärmeeintrag auf die Anordnung aus Antiresonanzelement-Vorformling und Kontaktelement,
/B-2./ Erstes Verbinden des Kontaktelements mit dem Antiresonanzelement-Vorformling durch einen ersten Anteil des Wärmeeintrags,
/B-3./ Zweites Verbinden des Antiresonanzelement-Vorformlings mit dem Hüllrohr durch einen zweiten Anteil des Wärmeeintrags.

|4.| Verfahren nach einem der vorhergehenden Ausführungsformen **dadurch gekennzeichnet, dass** das Kontaktelement derart ausgestaltet ist, dass gilt
C_ Hüllrohres > C_ Kontaktelement > C_ Antiresonanzelement-Vorformling
wobei

- C_ Hüllrohr eine über ein Einheitsvolumen gemittelte Wärmekapazität des Vollmaterials des Hüllrohres ist,
- C_ Kontaktelement eine über das Einheitsvolumen gemittelte Wärmekapazität des Kontaktelements und der umgebenden Luft ist,
- C_ Antiresonanzelement-Vorformling eine über das Einheitsvolumen gemittelte Wärmekapazität des Antiresonanzelement-Vorformlings und der umgebenden Luft ist,

und das Einheitsvolumen 25 Vol.-% größer ist als ein Volumen des Kontaktelements.

|5.| Verfahren nach einem der vorhergehenden Ausführungsformen **dadurch gekennzeichnet, dass** das thermische Fixieren in Schritt d) mittels eines flammenbasierten Prozesses erfolgt.

|6.| Verfahren nach einem der vorhergehenden Ausführungsformen **dadurch gekennzeichnet, dass** das Kontaktelement stabartig ausgestaltet ist, insbesondere dass das Kontaktelement
eine Länge von [5; 50] mm, insbesondere [10; 40] mm, insbesondere [12; 30] mm aufweist und
einen Durchmesser von [0,5; 10] mm, insbesondere [0,7; 7] mm, insbesondere [1; 5] mm aufweist.

|7.| Verfahren nach einem der vorhergehenden Ausführungsformen **dadurch gekennzeichnet, dass** das Kontaktelement in das ARE-Außenrohr des mindestens einem Antiresonanzelement-Vorformlings eingebracht wird.

|8.| Verfahren nach einem der vorhergehenden Ausführungsformen **dadurch gekennzeichnet, dass** das Kontaktelement in das ARE-Innenrohr des mindestens einen Antiresonanzelement-Vorformlings eingebracht wird.

|9.| Verfahren nach einem der vorhergehenden Ausführungsformen **dadurch gekennzeichnet, dass** das Anordnen der Antiresonanzelement-Vorformlinge an der Innenseite der Hüllrohr-Innenbohrung ein Anordnen der Antiresonanzelement-Vorformlinge an Soll-Positionen der Innenseite der Hüllrohr-Wandung umfasst, wobei das Anordnen der Antiresonanzelement-Vorformlinge mittels einer in die Hüllrohr-Innenbohrung einzuführenden Positionierungsschablone erfolgt, die Halteelemente zur Positionierung der Antiresonanzelement-Vorformlinge an den Soll-Positionen aufweist.

|10.| Verfahren nach einem der vorhergehenden Ausführungsformen **dadurch gekennzeichnet, dass** die Hüllrohr-Innenbohrung durch spanende Bearbeitung erzeugt wird, insbesondere durch Bohren, Fräsen, Schleifen, Honen und/oder Polieren.

|11.| Verfahren nach einem der vorhergehenden Ausführungsformen **dadurch gekennzeichnet, dass** das Hüllrohr einem Außendurchmesser im Bereich von 65 bis 300 mm, insbesondere 90 bis 250 mm aufweist und insbesondere eine Länge von mindestens 1 m aufweist.

|12.| Verfahren nach einem der vorhergehenden Ausführungsformen **dadurch gekennzeichnet, dass** das Verfahren einen Schritt aufweist:

- Erstellen eines Hüllrohr-Abschlusses durch ein wenigstens partielles Verschließen eines stirnseitigen Endes der Hüllrohr-Innenbohrung.

|13.| Verfahren zur Herstellung einer sekundären Vorform, aus der eine Hohlkernfaser ziehbar ist, aus einer Vorform, hergestellt nach einem der vorhergehenden Ansprüche 1 bis 12, aufweisend den Schritt

- Weiterverarbeitung der Vorform zu der sekundären Vorform,

wobei die Weiterverarbeitung eine einmalige oder wiederholte Durchführung von einem oder mehreren der folgenden Heißformprozesse umfasst:

i.) Elongieren,
ii.) Kollabieren,
iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

|14.| Verfahren zur Herstellung einer Antiresonanten-Hohlkernfaser aus einer Vorform, hergestellt nach einem der vorhergehenden Ausführungsformen 1 bis 12, aufweisend den Schritt

- Weiterverarbeitung der Vorform zu der Antiresonanten-Hohlkernfaser,

wobei die Weiterverarbeitung eine einmalige oder wiederholte Durchführung von einem oder mehreren der folgenden Heißformprozesse umfasst:

i.) Elongieren,
ii.) Kollabieren,
iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

|15.| Verfahren nach einem der vorhergehenden Ausführungsformen 13 oder 14 **dadurch gekennzeichnet, dass** beim Elongieren im Kernbereich ein relativer Innendruck im Bereich zwischen 0,05 mbar - 20 mbar eingestellt wird.

|16.| Verfahren nach einem der vorhergehenden Ausführungsformen **dadurch gekennzeichnet, dass** das Verfahren wenigstens einen der folgenden Punkte aufweist:

- eine Länge des Kontaktelements zwischen 40 mm und 60 mm, insbesondere 50 mm beträgt,
- ein Radius des Kontaktelements zwischen 0,25 mm und 5 mm, insbesondere 0,35 mm und 3,5 mm, insbesondere 0,8 mm und 1,5 mm, insbesondere 1 mm und 1,1 mm beträgt,
- eine Außenfläche des Kontaktelements zwischen 2,8 mm$^2$ und 4,5 mm$^2$, insbesondere 3,80 mm$^2$ beträgt,
- eine Masse des Hüllrohres im Einheitsvolumen zwischen 0,49 g und 0,55 g, insbesondere zwischen 0,50 g und 0,54 g, insbesondere 0,52 g beträgt,
- eine Masse des Kontaktelements und der umgebenden Luft im Einheitsvolumen zwischen 0,34 g und 0,48 g, insbesondere zwischen 0,40 g und 0,44 g, insbesondere 0,42 g beträgt,
- eine Masse des Antiresonanzelement-Vorformlings und der umgebenden Luft im Einheitsvolumen zwischen 0,14 g und 0,26 g, insbesondere zwischen 0,17 g und 0,23 g, insbesondere 0,2 g beträgt,
- die gemittelten Wärmekapazitäten C_Kontaktelement = [68%; 92%] C_ Hüllrohr und C_Antiresonanzelement-Vorformling = [21%; 51%] C_ Hüllrohr, insbesondere C_ Kontaktelement = [72%; 88%] C_ Hüllrohr und C_ Antiresonanzelement-Vorformling = [24%; 47%] C_ Hüllrohr, insbesondere C_ Kontaktelement = [76%; 85%] C_ Hüllrohr und C_ Antiresonanzelement-Vorformling = [28%; 44%] C_ Hüllrohr beträgt,
- das C_ Hüllrohr im Temperaturbereich [200 °C; 450°C] weniger als 0,70 J/(K), insbesondere weniger als 0,67 J/(K), insbesondere weniger als 0,62 J/(K), insbesondere weniger als 0,59 J/(K) beträgt,
- das C_ Hüllrohr im Temperaturbereich [200 °C; 450°C] mehr als 0,35 J/(K), insbesondere mehr als 0,42 J/(K), insbesondere mehr als 0,47 J/(K), insbesondere mehr als 0,51 J/(K) beträgt,
- das C_ Kontaktelement im Temperaturbereich [200 °C; 450°C] weniger als 0,55 J/(K), insbesondere weniger als 0,51 J/(K), insbesondere weniger als 0,48 J/(K), insbesondere weniger als 0,46 J/(K) beträgt,
- das C_ Kontaktelement im Temperaturbereich [200 °C; 450°C] mehr als 0,31 J/(K), insbesondere mehr als 0,33 J/(K), insbesondere mehr als 0,39 J/(K), insbesondere mehr als 0,41 J/(K) beträgt,
- das C_ Antiresonanzelement-Vorformling im Temperaturbereich [200 °C; 450°C] weniger als 0,3 J/(K), insbesondere weniger als 0,27 J/(K), insbesondere weniger als 0,23 J/(K), insbesondere weniger als 0,21 J/(K) beträgt,
- das C_ Antiresonanzelement-Vorformling im Temperaturbereich [200 °C; 450°C] mehr als 0,11 J/(K), insbesondere mehr als 0,13 J/(K), insbesondere mehr als 0,14 J/(K), insbesondere mehr als 0,17 J/(K) beträgt,
- wobei insbesondere die Wärmekapazität von Quarzglas 1052 [J/kg K], die Wärmekapazität von Luft 1005 [J/kg K], die Dichte von Quarzglas 0,0022 [g/mm$^3$] (bzw. 2,2 g/cm$^3$) und die Dichte von Luft 0,0000012 [g/mm$^3$] (bzw: 1,2 kg/m$^3$) beträgt (gemessen unter Normalbedingungen).

In der vorliegenden Beschreibung beinhalten Bereichsangaben auch die als Grenzen genannten Werte. Eine Angabe der Art "im Bereich von X bis Y" in Bezug auf eine Größe A bedeutet folglich, dass A die Werte X, Y und Werte zwischen X und Y annehmen kann. Einseitig begrenzte Bereiche der Art "bis zu Y" für eine Größe A bedeuten entsprechend als Wert Y und kleiner als Y.

Einige der beschriebenen Merkmale sind mit dem Begriff "im Wesentlichen" verknüpft. Der Begriff "im Wesentlichen" ist so zu verstehen, dass unter realen Bedingungen und Fertigungstechniken eine mathematisch exakte Auslegung von Begrifflichkeiten wie "Überlagerung", "senkrecht", "Durchmesser" oder "Parallelität" nie exakt, sondern nur innerhalb gewisser fertigungstechnischer Fehlertoleranzen gegeben sein kann. Beispielsweise schließen "im Wesentlichen parallele Achsen" einen Winkel von -5 Grad bis 5 Grad zueinander ein und "im Wesentlichen gleiche Volumen" umfassen eine Abweichung von bis zu 5 Volumen-%. Eine "im Wesentlichen aus Quarzglas bestehende Vorrichtung" umfasst beispielsweise einen Quarzglasanteil von ≥95 bis ≤100 Gewichts-%. Weiterhin schließen "im Wesentlichen rechtwinklig" einen Winkel von 85 Grad bis 95 Grad ein.

Ausführliche Beschreibung

Die Erfindung betrifft ein Verfahren zur Herstellung einer Vorform einer Antiresonanten-Hohlkernfaser. Im Rahmen eines Schrittes a) erfolgt ein Bereitstellen eines Hüllrohres, dass eine Hüllrohr-Innenbohrung und eine Hüllrohr-Längsachse aufweist, entlang der sich eine von einer Innenseite und einer Außenseite begrenzte Hüllrohr-Wandung erstreckt.
Ein Schritt b) umfasst ein Vorbereiten einer Anzahl von Antiresonanzelement-Vorformlingen, die aus mehreren, miteinander verschachtelten rohrförmigen Strukturelementen zusammengesetzt sind, umfassend ein ARE-Außenrohr und ein darin eingesetztes ARE-Innenrohr, wobei die Strukturelemente eine Strukturelemente-Längsachse aufweisen. Ein Schritt c) umfasst ein Anordnen der Antiresonanzelement-Vorformlinge an der Innenseite der Hüllrohr-Wandung. Ein Schritt d) umfasst ein thermisches Fixieren der Antiresonanzelement-Vorformlinge an der Hüllrohr-Wandung durch Wärmeintrag.

Die Lösung der Aufgaben wird dadurch erzielt, dass das Verfahren in Schritt e) ein derartiges Einbringen von jeweils einem Kontaktelement in mindestens einem Antiresonanzelement-Vorformling umfasst, dass das Kontaktelement in Schritt d) die wärmeaufnehmende Masse des Antiresonanzelement-Vorformlings erhöht, um beim thermischen Fixieren einen Wärmefluss aus dem Hüllrohr in den Antiresonanzelement-Vorformling zu verlangsamen.

Die Antiresonanzelemente können einfache oder verschachtelte Strukturelemente der Hohlkernfaser sein. Sie haben mindestens zwei Wandungen, die aus Richtung des Hohlkerns gesehen eine negative Krümmung haben (konvex) oder keine Krümmung haben (plan, gerade). Sie bestehen in der Regel aus einem Material, das für das Arbeitslicht transparent ist, beispielsweise aus Glas, insbesondere aus dotiertem oder nicht dotiertem Quarzglas (SiO2), einem Kunststoff, insbesondere aus einem Polymer, aus einem Verbundwerkstoff oder aus kristallinem Material.

Als Antiresonanzelement-Vorformlinge werden Bauteile oder Bestandteile der Vorform bezeichnet, die im Wesentlichen durch einfaches Langziehen beim Faserziehprozess zu Antiresonanzelementen in der Hohlkernfaser werden. Die Antiresonanzelement-Vorformlinge können einfache oder verschachtelte Bauteile sein, an denen zusätzlich Positionierhilfen fixiert sein können. Die Antiresonanzelement-Vorformlinge haben mindestens zwei Wandungen, die aus Richtung des Hohlkerns gesehen eine negative Krümmung haben (konvex) oder keine Krümmung haben (plan, gerade). Durch Weiterverarbeitung der Vorform, insbesondere durch Heißumformschritte, können Zwischenprodukte entstehen, in denen die ursprünglichen Antiresonanzelement-Vorformlinge in einer gegenüber der ursprünglichen Form veränderten Form vorliegen.

Die Vorform ist dasjenige Bauteil, aus dem die Antiresonante-Hohlkernfaser gezogen werden kann. Alternative kann die Vorform zu einer sekundären Vorform weiterverarbeitet werden, aus der die Hohlkernfaser gezogen wird. Diese Weiterverarbeitung kann eine einmalige oder wiederholte Durchführung von Heißformprozessen, wie z.B. Elongieren, Kollabieren oder Aufkollabieren von zusätzlichem Mantelmaterial umfassen.

Beim thermischen Fixieren des mindestens einen Antiresonanzelement-Vorformlings erfolgt ein Wärmeeintrag von außen auf die Hüllrohr-Wandung. Dieses Wärmeeintrag kann mittels eines Brenners, wie etwa einem Wasserstoff Brenner erfolgen. Ziel des thermischen Fixierens in Schritt d) ist eine stoffschlüssige Verbindung zwischen dem Antiresonanzelement-Vorformling und der Hüllrohr-Wandung. Der eingebrachte Wärmeeintrag muss folglich derart sein, dass eine stoffschlüssige Verbindung zwischen den Materialien der beiden Elemente möglich ist. Diese kann erreicht werden, wenn die Hüllrohr-Wandung und der Antiresonanzelement-Vorformling zumindest partiell aus dem festen Zustand in den flüssigen, insbesondere zähflüssigen Zustand wechseln. Als nachteilig hat sich dabei herausgestellt, dass der Wärmeeintrag, welcher für das thermische Fixieren notwendig ist, zu einer Zerstörung des mindestens einen Antiresonanzelement-Vorformlings führen kann.

Der Antiresonanzelement-Vorformling ist aus rohrartigen Strukturelementen aufgebaut, von denen mindestens ein Teil einer Wandstärke im Bereich von 0,1 mm bis 2 mm, vorzugsweise 0,2 mm bis 1,5 mm aufweist. Der benötigte Wärmeeintrag, um diesen Antiresonanzelement-Vorformling an- und/oder aufzuschmelzen, kann kleiner sein als der benötigte Wärmeeintrag, um das Hüllrohr in seinem Zustand derart zu verändern, dass ein Fixieren des Antiresonanzelement-Vorformlings möglich ist. Insbesondere kann die von außen auf das Hüllrohr eingebrachte thermische Wärme zu einer derart schnellen Temperaturerhöhung der Hüllrohr-Innenbohrung führen, dass eine thermische Deformation oder/oder thermische Zerstörung des mindestens einen Antiresonanzelement-Vorformlings auftritt. Um diese zu verhindern und somit eine präzise Positionierung des Antiresonanzelement-Vorformlings in der Vorform sicherzustellen, offenbart die Erfindung die Nutzung eines Kontaktelements, welches die wärmeaufnehmende Masse des Antiresonanzelement-Vorformlings erhöht. Das Kontaktelement kann den Temperaturanstieg beim thermischen Fixieren verlangsamen.

Dieses Konzept eignet sich auch für ein reproduzierbares und präzises Herstellungsverfahren für Antiresonante-Hohlkernfasern im industriellen Maßstab. Es ist insbesondere zur präzisen Herstellung Antiresonanter-Hohlkernfasern mit verschachtelten Antiresonanzelementen geeignet, die stark voneinander abweichende Innendurchmesser haben.

Die Genauigkeit der Positionierung des mindestens einen Antiresonanzelement-Vorformlings im Hüllrohr wird verbessert, indem rohrförmige Strukturelemente bereitgestellt werden, von denen mindestens ein Teil eine Wandstärke im Bereich von 0,2 und 2 mm, vorzugsweise eine Wandstärke im Bereich von 0,25 und 1 mm, hat, und wobei ein Hüllrohr mit einem Außendurchmesser im Bereich von 65 bis 300 mm, vorzugsweise mit einem Außendurchmesser im Bereich von 90 bis 250 mm, vorzugsweise mit einem Außendurchmesser im Bereich von 120 bis 200 mm bereitgestellt wird. Insbesondere können diese Bauteile dabei jeweils eine Länge von mindestens 1 m aufweisen.

Eine Ausführungsform des Verfahrens ist dadurch gekennzeichnet, dass der Schritt e) die sequenziellen Schritte umfasst:

/A-1./ Verbinden des Kontaktelements mit dem Antiresonanzelement-Vorformling,
/A-2./ Verbinden des Antiresonanzelement-Vorformlings mit dem Hüllrohr.

Im Rahmen dieses Verfahrens findet zuerst ein Verbinden des Kontaktelements mit dem Antiresonanzelement-Vorformlings statt. Der durch die Hüllrohr-Wandung durchtretende Wärmefluss erhitzt sowohl den Antiresonanzelement-Vorformling als auch das Kontaktelement. Beide gehen einen stoffschlüssigen Verbund ein. Anschließend findet eine insbesondere stoffschlüssige Verbindung des Systems aus Antiresonanzelement-Vorformling und Kontaktelement mit dem Hüllrohr statt. Diese sequenzielle Schrittfolge stellt sicher, dass die wärmeaufnehmende Masse des Antiresonanzelement-Vorformlings erhöht ist, wenn das thermische Fixieren des Antiresonanzelement-Vorformlings, an der Hüllrohr-Innenbohrung stattfindet.

Eine Ausführungsform des Verfahrens ist dadurch gekennzeichnet, dass der Schritt e) die sequenziellen Schritte umfasst:

/B-1./ Wärmeeintrag auf die Anordnung aus Antiresonanzelement-Vorformling und Kontaktelement,
/B-2./ Erstes Verbinden des Kontaktelements mit dem Antiresonanzelement-Vorformling durch einen ersten Anteil des Wärmeeintrags,
/B-3./ Zweites Verbinden des Antiresonanzelement-Vorformlings mit dem Hüllrohr durch einen zweiten Anteil des Wärmeeintrags.

Bei dieser Ausführungsform des Verfahrens erfolgt ein sequenzielles Verbinden der Elemente der Vorform. Im Rahmen des ersten Verbindens wird ein stoffschlüssiger Verbund zwischen dem Kontaktelement und dem mindestens einen Antiresonanzelement-Vorformling erzeugt. Dieser Verbund entsteht durch einen ersten Anteil des Wärmeeintrages.

Im Rahmen der thermischen Fixierung in Schritt d) erfolgt ein Wärmeeintrag, insbesondere durch einen Brenner, auf das Hüllrohr. In einer Ausführungsvariante erfolgt der Wärmeeintrag von der Außenseite auf die Hüllrohr-Wandung, insbesondere erfolgt der Wärmeeintrag im Wesentlichen rechtwinklig auf die Hüllrohr-Wandung. Dabei durchströmt die Wärme die Rohrwandung und tritt an der Hüllrohr-Innenbohrung auf das Kontaktelement sowie den mindestens einen Antiresonanzelement-Vorformling. In einer weiteren Ausführungsvariante erfolgt der Wärmeeintrag an der Stirnfläche des Hüllrohrs in der Nähe der Antiresonanzelement-Vorformlinge. Dieser Wärmeeintrag kann insbesondere mittels fokussierter Flamme erfolgen. Dabei durchströmt die Wärme die Stirnfläche des Hüllrohrs und tritt dort in die Rohrwandlung ein. Der Austritt der Wärme erfolgt - unter anderem - an der Hüllrohr-Innenbohrung. Dort wirkt die Wärme dann auf das Kontaktelement sowie den mindestens einen Antiresonanzelement-Vorformling.

In einer Ausführungsvariante erfolgt die thermische Fixierung in Schritt d) unter Zuhilfenahme eines drahtartigen Verbindungselements aus Glas, insbesondere Quarzglas. Dieses Verbindungselement, auch als Schweißdraht oder Schweißzusatz bezeichnet, wird im Rahmen der thermischen Fixierung in Schritt d) durch den Wärmefluss erhitzt. Aufgrund der lokal geringen Masse des Verbindungselementes kann dieses an- und/oder aufgeschmolzen werden und dient so als eine Art Kleber zwischen den zu verbindenden Elementen Hüllrohr-Innenbohrung und Antiresonanzelement-Vorformling, der den stoffschlüssigen Verbund fördert.

In beiden Ausführungsformen erwärmt dieser erste Anteil des Wärmeeintrages das Kontaktelement und den Antiresonanzelement-Vorformling derart, dass ein erster stoffschlüssiger Verbund entsteht. Dieser stoffschlüssige Verbund führt dazu, dass die wärmeaufnehmende Masse des Antiresonanzelement-Vorformlings in jenem Bereich erhöht ist, in dem durch den Wärmeeintrag eine Temperaturerhöhung im Rahmen des Schrittes d) stattfindet.

Durch die Erhöhung der wärmeaufnehmenden Masse ist bei gleichbleibendem Wärmeeintrag die Geschwindigkeit des Anstieges der Temperatur und/oder die zu erreichende Maximaltemperatur des Antiresonanzelement-Vorformlings reduziert. Insofern ist auch die Gefahr einer thermischen Zerstörung und/oder thermischen Veränderung des Antiresonanzelement-Vorformlings reduziert. Im darauffolgenden Schritt /B-3/ wird durch den zweiten Anteil des Wärmeeintrages das Hüllrohr, insbesondere die Hüllrohr-Innenbohrung derart erwärmt, dass ein stoffschlüssiger Verbund des Hüllrohres mit dem Antiresonanzelement-Vorformling erzielt wird. Dieser zweite Verbund ist das eigentliche Ziel des erfindungsgemäßen Verfahrens. Durch erfindungsgemäße Nutzung des Kontaktelements ist sichergestellt, dass sich die Temperatur auf der Hüllrohr-Innenbohrung und dem, mit dem Kontaktelement versehenen Antiresonanzelement-Vorformling nicht signifikant unterscheiden. Vorzugsweise liegt die Temperaturdifferenz im örtlichen Bereich des Wärmeeintrages zwischen der Hüllrohr-Innenbohrung und dem Antiresonanzelement-Vorformling bei weniger als 300 °C, insbesondere weniger als 200 °C, insbesondere weniger als 50 °C.

Für die Ausgestaltung des Kontaktelements sind zwei widerstrebende Aspekte zu beachten:

- Ist das Kontaktelement zu groß gestaltet, so nimmt es im Rahmen des Schrittes e) zu viel thermische Energie auf und verhindert so einen zügigen stoffschlüssigen Verbund zwischen dem Antiresonanzelement-Vorformling und der Hüllrohr-Wandung. In Folge dessen wirkt die thermische Wärmequelle gegeben falls zu lange auf die Hüllrohr-Wandung ein und schädigt diese. Die Schädigung kann dabei in einem Abschmelzen von Teilen der Hüllrohr-Wandung bestehen oder einer Deformation der Hüllrohr-Wandung durch den Flammendruck. Alternativ oder zusätzlich besteht bei einem zu groß gewählten Kontaktelement die Gefahr, dass der Antiresonanz-Vorformling während des thermischen Fixierens verschlossen wird. Dadurch könnte sich bei der Weiterverarbeitung ein Druck im Antiresonanz-Vorformling aufbauen, der zu einer ungewollten Deformation und/oder Expansion des Antiresonanz-Vorformlings führt.

- Ist das Kontaktelement zu klein gestaltet, kann es nicht die erfindungsgemäße Aufgabe übernehmen die wärmeaufnehmende Masse des Antiresonanzelement-Vorformlings genügend zu erhöhen. Als Resultat erfolgt keine exakte Positionierung des Antiresonanzelement-Vorformlings oder im schlimmsten Fall sogar eine Zerstörung Antiresonanzelement-Vorformlings.

Eine Ausführungsform des Verfahrens ist dadurch gekennzeichnet, dass das Kontaktelement derart ausgestallte ist, dass gilt

C_ Hüllrohr > C_ Kontaktelement > C_ Antiresonanzelement-Vorformling

wobei

- C_ Hüllrohr eine über ein Einheitsvolumen gemittelte Wärmekapazität des Vollmaterials des Hüllrohres ist,
- C_ Kontaktelement eine über das Einheitsvolumen gemittelte Wärmekapazität des Kontaktelements und der umgebenden Luft ist,
- C_ Antiresonanzelement-Vorformling eine über das Einheitsvolumen gemittelte Wärmekapazität des Antiresonanzelement-Vorformlings und der umgebenden Luft ist,

und das Einheitsvolumen 25 Vol.-% größer ist als ein Volumen des Kontaktelements.

Die spezifische Wärmekapazität C eines Stoffes bezeichnet dessen auf die Masse bezogene Wärmekapazität. Die spezifische Wärmekapazität eines Stoffes in einem bestimmten Zustand ist die Wärme, die einer Menge des Stoffes zugeführt oder entzogen wird, dividiert durch die zugehörige Temperaturerhöhung oder -erniedrigung und die Masse des Stoffes

$$C = \frac{\Delta Q}{m \cdot \Delta T}$$

Dabei ist

- $\Delta Q$ die Wärme, die dem Stoff zugeführt oder entzogen wird,
- m die Masse des Stoffes,
- $\Delta T = T2 - T1$ die Differenz von End- und Anfangstemperatur.

Bei homogenen Körpern lässt sich die Wärmekapazität als Produkt der spezifischen Wärmekapazität C und der Masse m des Körpers berechnen,

Das Einheitsvolumen bezeichnet ein Volumen V_Einheitsvolumen, welches 25 Vol.-% größer ist als das Volumen des Kontaktelements V_Kontaktelement. Insofern gilt:

$$V\_Einheitsvolumen = V\_Kontaktelement + 25\ Vol.\% * V\_Kontaktelement$$

Die gemittelte Wärmekapazität bezeichnet das arithmetische Mittel der spezifischen Wärmekapazität der im Einheitsvolumen befindlichen Materialien.

Somit bezeichnet C_ Hüllrohr die über ein Einheitsvolumen gemittelte Wärmekapazität des Vollmaterials des Hüllrohres. Insofern ist die gemittelte Wärmekapazität des Hüllrohres C_ Hüllrohr gleich der spezifischen Wärmekapazität des Vollmaterials des Höherohres.

Weiterhin bezeichnet C_ Kontaktelement eine über das Einheitsvolumen gemittelte Wärme kapazität des Kontaktelements und der umgebenden Luft. Dabei trägt die spezifische Wärmekapazität des Kontaktelements zu 75 % und die der umgebenden Luft zu 25 % zu der gemittelten Wärmekapazität C_ Kontaktelement des Kontaktelements bei.

Die gemittelte Wärmekapazität des Antiresonanzelement-Vorformlings C_ Antiresonanz element-Vorformling errechnet sich aus der über das Einheitsvolumen gemittelte Wärmekapazität des Antiresonanzelement-Vorformlings und der umgebenden Luft. Das Kontaktelement wird bei dieser Berechnung nicht berücksichtigt. Die gemittelte Wärmekapazität des Antiresonanzelement-Vorformlings ergibt sich somit über einen Kontaktelement-freien Abschnitt des Antiresonanzelement-Vorformlings und der umgebenden Luft.

Da es sich bei den Antiresonanzelement-Vorformlingen um rohrartige Strukturelemente, vorzugsweise aufweisend oder bestehend aus Quarzglas, handeln kann, welche insbesondere eine Wandstärke im Bereich von 0,2 mm bis 2 mm aufweisen, zeichnet sich eine Ausführungsform dadurch aus, dass

$$C\_\ Antiresonanzelement\text{-}Vorformling = [15\%;\ 55\%]\ C\_\ H\ddot{u}llrohres$$

beträgt.

Eine Ausführungsform zeichnet sich dadurch aus, dass die über ein Einheitsvolumen gemittelten Wärmekapazitäten der thermisch im Rahmen des Schrittes f. fixierten Elemente - Hüllrohr, Kontaktelement, Antiresonanzelement-Vorformling - aufeinander angepasst sind. Durch eine entsprechende Ausgestaltung und Anpassung der gemittelten Wärmekapazitäten ist sichergestellt, dass eine stoffschlüssige Verbindung zwischen dem Antiresonanzelement-Vorformling und der Hüllrohr-Wandung mit hoher Präzision erzielt wird. Eine Abstufung der drei gemittelten Wärmekapazitäten

- C_Kontaktelement  = [68%; 92%] C_Hüllrohr
- C_Antiresonanzelement-Vorformling  = [21%; 51%] C_Hüllrohr

balanciert zwei im Folgenden beschriebenen und einander widerstrebende Effekte aus. Insbesondere balanciert eine Abstufung der drei gemittelten Wärmekapazitäten gemäß

- C_Kontaktelement  = [72%; 88%] C_Hüllrohr
- C_Antiresonanzelement-Vorformling  = [24%; 47%] C_Hüllrohr

die zwei im Folgenden beschriebenen und einander widerstrebenden Effekte aus. Insbesondere balanciert eine Abstufung der drei gemittelten Wärmekapazitäten gemäß

- C_Kontaktelement  = [76%; 85%] C_Hüllrohr
- C_Antiresonanzelement-Vorformling  = [28%; 44%] C_Hüllrohr

die zwei im Folgenden beschriebenen und einander widerstrebenden Effekte aus.

Eine Ausführungsform ist dadurch gekennzeichnet, dass das C_ Hüllrohr im Temperaturbereich [200 °C; 450°C] weniger als 0,70 J/(K), insbesondere weniger als 0,67 J/(K), insbesondere weniger als 0,62 J/(K), insbesondere weniger als 0,59 J/(K) beträgt.

Eine Ausführungsform ist dadurch gekennzeichnet, dass das C_ Hüllrohr im Temperaturbereich [200 °C; 450°C] mehr als 0,35 J/(K), insbesondere mehr als 0,42 J/(K), insbesondere mehr als 0,47 J/(K), insbesondere mehr als 0,51 J/(K) beträgt.

Eine Ausführungsform ist dadurch gekennzeichnet, dass das C_ Kontaktelement im Temperaturbereich [200 °C; 450°C] weniger als 0,55 J/(K), insbesondere weniger als 0,51 J/(K), insbesondere weniger als 0,48 J/(K), insbesondere weniger als 0,46 J/(K) beträgt.

Eine Ausführungsform ist dadurch gekennzeichnet, dass das C_ Kontaktelement im Temperaturbereich [200 °C; 450°C] mehr als 0,31 J/(K), insbesondere mehr als 0,33 J/(K), insbesondere mehr als 0,39 J/(K), insbesondere mehr als 0,41 J/(K) beträgt.

Eine Ausführungsform ist dadurch gekennzeichnet, dass der C_ Antiresonanzelement-Vorformling im Temperaturbereich [200 °C; 450°C] weniger als 0,3 J/(K), insbesondere weniger als 0,27 J/(K), insbesondere weniger als 0,23 J/(K), insbesondere weniger als 0,21 J/(K) beträgt.

Eine Ausführungsform ist dadurch gekennzeichnet, dass der C_ Antiresonanzelement-Vorformling im Temperaturbereich [200 °C; 450°C] mehr als 0,11 J/(K), insbesondere mehr als 0,13 J/(K), insbesondere mehr als 0,14 J/(K), insbesondere mehr als 0,17 J/(K) beträgt.

Eine Ausführungsform ist dadurch gekennzeichnet, dass das Verfahren wenigstens einen der folgenden Punkte aufweist:

- eine Länge des Kontaktelements zwischen 40 mm und 60 mm, insbesondere 50 mm beträgt,
- ein Radius des Kontaktelements zwischen 0,25 mm und 5 mm, insbesondere 0,35 mm und 3,5 mm, insbesondere 0,8 mm und 1,5 mm, insbesondere 1 mm und 1,1 mm beträgt,
- eine Außenfläche des Kontaktelements zwischen 2,8 mm$^2$ und 4,5 mm$^2$, insbesondere 3,80 mm$^2$ beträgt,
- eine Masse des Hüllrohres im Einheitsvolumen zwischen 0,49 g und 0,55 g, insbesondere zwischen 0,50 g und 0,54 g, insbesondere 0,52 g beträgt,
- eine Masse des Kontaktelements und der umgebenden Luft im Einheitsvolumen zwischen 0,34 g und 0,48 g, insbesondere zwischen 0,40 g und 0,44 g, insbesondere 0,42 g beträgt,
- eine Masse des Antiresonanzelement-Vorformlings und der umgebenden Luft im Einheitsvolumen zwischen 0,14 g und 0,26 g, insbesondere zwischen 0,17 g und 0,23 g, insbesondere 0,2 g beträgt.

Eine Ausführungsform des Verfahrens ist dadurch gekennzeichnet, dass das Kontaktelement stabartig ausgestaltet ist.

Eine Ausführungsform des Verfahrens ist dadurch gekennzeichnet, dass das Kontaktelement ein Material aufweist, das für ein Arbeitslicht der optischen Faser transparent ist, beispielsweise Glas, insbesondere dotiertes oder nicht dotiertes Quarzglas ($SiO2$). Weiterhin können nur Teile des Kontaktelements Quarzglas aufweisen und/oder das Kontaktelement kann aus dotiertem oder nicht dotiertem Quarzglas besteht.

Eine Ausführungsform ist dadurch gekennzeichnet, dass das thermische Fixieren in Schritt e) mittels eines flammenbasierten Prozesses erfolgt. Bei dem flammenbasierten Prozess (wie der Flammenhydrolyse) wird vorzugsweise Wasserstoff - auch als "H2" bezeichnet - als Brenngas verwendet. Es reagiert mit dem Sauerstoff - auch als "O2" bezeichnet - in der Luft. Diese exotherme Reaktion erzeugt die in Schritt e) benötigte Energie.

Eine Ausführungsform ist dadurch gekennzeichnet, dass das Kontaktelement eine Länge von weniger als 15 cm, insbesondere weniger als 10 cm, insbesondere weniger als 8 cm, insbesondere weniger als 5 cm aufweist. In einer weiteren Ausführungsform weist das Kontaktelement eine Länge von mehr als 0,5 cm, insbesondere mehr als 1 cm, insbesondere mehr als 1 cm auf. Eine weitere Ausführungsform ist dadurch gekennzeichnet, dass das Kontaktelement stabartig ausgestaltet ist, insbesondere dass das Kontaktelement eine Länge von [5; 50] mm, insbesondere [10; 40] mm, insbesondere [12; 30] mm aufweist und einen Durchmesser von [0,5; 10] mm, insbesondere [0,7; 7] mm, insbesondere [1; 5] mm aufweist. Vorzugsweise ist das Kontaktelement zylinderförmigen ausgestaltet. In einer weiteren Ausführungsform ist das Kontaktelement materialidentisch oder im Wesentlichen materialidentisch mit dem Material des Antiresonanzelement-Vorformlings und/oder mit dem Material des Hüllrohrs ausgestaltet.

An die Größe und geometrische Form des Kontaktelements können zwei einander widersprechende Anforderungen gestellt sein. In einer Ausführungsform ist das Kontaktelement derart ausgestaltet, dass durch das Wirken des Kontaktelements ein zu verbindender Bereich des Antiresonanzelement-Vorformlings und ein zu verbindender Bereich des Hüllrohrs im Wesentlichen zum selben Zeitpunkt eine im Wesentlichen gleiche Temperatur bzw. eine im Wesentlichen gleichen Aggregatszustand erreichen. Dieses erlaubt eine besonders hohe Präzision bei der Verbindung. Diese Ausführungsform führt zu Kontaktelementen, die eher länger und massiver sind.

In einer weiteren Ausführungsform ist das Kontaktelement möglichst klein ausgestaltet, um jenen Bereich der Vorform, der das Kontaktelement aufnehmen muss, geometrisch möglichst klein zu halten. Sollte das Kontaktelement im Rahmen des Schrittes e) ebenfalls eine stoffschlüssige Verbindung mit dem Antiresonanzelement-Vorformling eingehen, verbleibt das Kontaktelement in der fertigen Vorform. Wird diese zu einer Antiresonanten-Hohlkernfaser ausgezogen, kann das Kontaktelement zumindest bereichsweise zu einem Verstopfen des ARE-Außenrohres und/oder ARE-Innenrohres führen. Dieser Bereich, der nicht zu einer nutzbaren Antiresonanten-Hohlkernfaser ausgezogen werden kann, sollte möglichst klein gehalten werden.

Insofern existieren zwei einander widersprechende Anforderungen an die Größe des Kontaktelements. Die oben aufgeführten Geometrien vereinen die beide Anforderungen am besten und ermöglichen so eine hohe Präzision der Strukturelemente und eine exakte Positionierung der Antiresonanzelemente in einem stabilen Prozess.

Eine Ausführungsform ist dadurch gekennzeichnet, dass das Kontaktelement in das ARE-Außenrohr des mindestens einen Antiresonanzelement-Vorformlings eingebracht wird. In dieser Konstellation ist das Kontaktelement neben dem ARE-Innenrohr innerhalb des ARE-Außenrohres angeordnet. Zur Sicherstellung der erfindungsgemäßen Aufgabe kann das Kontaktelement halbmondartig ausgestaltet sein und somit zumindest partiell das ARE-Innenrohr umfassen. Alternativ ist auch eine zylinderförmige Ausgestaltung des Kontaktelements möglich.

Eine Ausführungsform ist dadurch gekennzeichnet, dass das Kontaktelement in das ARE-Innenrohr des mindestens einen Antiresonanzelement-Vorformlings eingebracht wird. Diese Ausführungsform weist den Vorteil auf, dass das Kontaktelement leicht in das ARE-Innenrohr eingeführt werden kann, was den Herstellungsprozess vereinfacht. Darüber hinaus kann das Kontaktelement einen Außendurchmesser aufweisen, welcher kleiner ist als der Innendurchmesser des ARE-Innenrohres. Vorteilhafterweise beträgt der Außendurchmesser des Kontaktelements maximal 95 %, insbesondere 93 %, insbesondere 90 % des Innendurchmessers des ARE Innenrohres. Vorteilhafterweise beträgt der Außendurchmesser des Kontaktelements mindestens 30 %, insbesondere 35 %, insbesondere 40 % des Innendurchmessers des ARE Innenrohres. In einer Ausführungsform sind das ARE Innenrohr und das Kontaktelement materialidentisch oder im Wesentlichen materialidentisch. Diese Ausführungsform hat den Vorteil, dass keine Kontamination des ARE-Innenrohres im Rahmen des Schrittes e) durch das Kontaktelement auftreten.

Eine Ausführungsform ist dadurch gekennzeichnet, dass das Anordnen der Antiresonanzelement-Vorformlinge an der Innenseite der Hüllrohr-Innenbohrung ein Anordnen der Antiresonanzelement-Vorformlinge an Soll-Positionen der Innenseite der Hüllrohr-Wandung umfasst, wobei das Anordnen der Antiresonanzelement-Vorformlinge mittels einer in die Hüllrohr-Innenbohrung einzuführenden Positionierungsschablone erfolgt, die Halteelemente zur Positionierung der Antiresonanzelement-Vorformlinge an den Soll-Positionen aufweist.

Die Positionierungsschablone weist beispielsweise einen in die Mantelrohr-Innenbohrung ragenden Schaft auf, der mit Halteelementen in Form mehrerer radial nach außen weisender Haltearme versehen ist. Die konstruktiv vorgegebene sternförmige Anordnung der Halteelemente erleichtert die exakte Positionierung der Antiresonanzelement-Vorformlinge an den jeweiligen Soll-Positionen und deren Fixierung.

Die Halteelemente können kraft- und/oder formschlüssige Kontakt mit den ARE Antiresonanzelement-Vorformlinge aufweisen. In einer Ausführungsform haben die Halteelemente teilweise eine äußere Form, die zumindest partiell die äußere Form der Antiresonanzelement-Vorformlinge spiegelt. In einer Ausführungsform können die Halteelementen der Positionierungsschablone Graphit aufweisen, insbesondere aus Graphit bestehen. In einer Ausführungsform kann die Positionierungsschablone aus Graphit bestehen.

Eine Ausführungsform ist dadurch gekennzeichnet, dass die Hüllrohr-Innenbohrung durch spanende Bearbeitung erzeugt wird, insbesondere durch Bohren, Fräsen, Schleifen, Honen und/oder Polieren. Diese Bearbeitungstechniken liefern im Vergleich zu anderen bekannten Umformtechniken unter Einsatz von Hitze und Druck genauere und filigranere Strukturen und vermeiden Verunreinigungen der Oberflächen durch Formwerkzeuge.

Die Genauigkeit der Positionierung der Vorformlinge im Mantelrohr wird verbessert, indem rohrförmige Strukturelemente bereitgestellt werden, von denen mindestens ein Teil eine Wandstärke im Bereich von 0,2 und 2 mm, vorzugsweise eine Wandstärke im Bereich von 0,25 und 1 mm, hat, und wobei ein Mantelrohr mit einem Außendurchmesser im Bereich von 65 bis 300 mm, vorzugsweise mit einem Außendurchmesser im Bereich von 90 bis 250 mm, vorzugsweise mit einem Außendurchmesser im Bereich von 120 bis 200 mm bereitgestellt wird. Zusätzlich können diese Bauteile dabei jeweils eine Länge von mindestens 1 m aufweisen.

Hierbei handelt es sich um relativ großvolumige Strukturelemente zur Bildung von Antiresonanzelementen. Dies vereinfacht die Handhabung. Zudem unterstützt bei vertikaler Anordnung von Mantelrohr und Strukturelementen die Gravitationskraft die Parallelität und die vertikale Ausrichtung der Strukturelement-Längsachsen, wenn die Strukturelemente jeweils an ihrem oberen stirnseitigen Ende an der Soll-Position positioniert sind.

Eine Ausführungsform ist dadurch gekennzeichnet, dass die Antiresonanzelemente um den Hohlkern mit einer ungeradzahligen Symmetrie angeordnet sind.

Eine Ausführungsform ist dadurch gekennzeichnet, dass das Verfahren einen Schritt aufweist:

- Erstellen eines Hüllrohr-Abschlusses durch ein wenigstens partielles Verschließen eines stirnseitigen Endes der Hüllrohr-Innenbohrung.

Im Rahmen dieses Verfahrensschritts wird mindestens eines der stirnseitigen Enden der Antiresonanzelement-Vorformlinge partiell verschlossen, um ein Hüllrohr-Abschluss zu erstellen. Die erfindungsgemäße Vorform zeichnet sich durch einen großen Außendurchmesser aus. Da mit zunehmendem Außendurchmesser der Vorform die vorhandene absolute Geometriefehler beim Faserziehen stärker herunterskaliert werden, wird so eine präzisere Fertigung der Hohlkernfaser grundsätzlich ermöglicht. Es hat sich jedoch gezeigt, dass eine beliebige Vergrößerung des Vorform-Außendurchmessers nicht automatisch zu einer präziseren Hohlkernfaser führt, sondern, dass zur Einhaltung eines maximalen relativen Geometriefehlers von 3,5% in der Wanddicke der Hohlkernfaser die folgende Maßnahme hilfreich ist. Alle Antiresonanzelement-Vorformlinge oder mindestens ein Teil bilden Hohlkanäle und sind in der Regel beidseitig offen. Der freie Innendurchmesser der Hohlkanäle ist klein und liegt in der Vorform typischerweise im Bereich einiger Millimeter. Beim Heißformprozess wird die Vorform von außen erwärmt, so dass sich im Vorform-Volumen ein radialer Temperaturgradient einstellt. Die auftretende Temperaturdifferenz - und damit der erzeugte Viskositätsunterschiede - ist bei ansonsten gleichen Prozessbedingungen umso größer je dicker die Vorform ist. Es besteht die Gefahr, dass die Hohlkanäle infolge der Oberflächenspannung und abhängig von der lokalen Temperatur unterschiedlich schrumpfen. Diese Gefahr ist umso größer, je größer der radiale Temperaturgradient und je dicker die Vorform ist. Auf den zentralen Hohlkern hat der Temperaturgradient hingegen keine wesentlichen Auswirkungen. Um diesem Effekt bei den erfindungsgemäß relativ dicken Vorformen zu begegnen, wird beim Faserziehprozess mit vertikaler Orientierung der Längsachsen der Kernbereich (Hohlkern) offengelassen, aber bei mindestens einem Teil der Antiresonanzelement-Vorformlinge das ansonsten offene, obere Ende mit einem Hüllrohr-Abschluss mindestens teilweise verschlossen.

Die oben genannten Aufgaben werden auch gelöst durch ein Verfahren zur Herstellung einer sekundären Vorform, aus der eine Hohlkernfaser ziehbar ist, aus einer Vorform, hergestellt nach einem der vorhergehenden Ausführungsformen, aufweisend den Schritt

- Weiterverarbeitung der Vorform zu der sekundären Vorform,

wobei die Weiterverarbeitung eine einmalige oder wiederholte Durchführung von einem oder mehreren der folgenden Heißformprozesse umfasst:

    i.) Elongieren,
    ii.) Kollabieren,
    iii.) Kollabieren und gleichzeitiges Elongieren,
    iv.) Aufkollabieren von zusätzlichem Mantelmaterial,
    v.) Aufkollabieren von zusätzlichem Mantelmaterial und anschließendes Elongieren,
    vi.) Aufkollabieren von zusätzlichem Mantelmaterial und gleichzeitiges Elongieren.

Ausgangspunkt für die Herstellung der Antiresonanten-Hohlkernfaser ist eine Vorform. In dem erfindungsgemäßen Verfahren wird die Vorform durch die Durchführung eines oder mehrerer Heißformprozesse zu einer sekundären Vorform weiterverarbeitet.

Beim Elongieren wird die Vorform gelängt. Die Längung kann ohne gleichzeitiges Kollabieren erfolgen. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden. Beim Kollabieren wird eine Innenbohrung verengt oder Ringspalte zwischen rohr-förmigen Bauteil werden geschlossen oder verengt. Das Kollabieren geht in der Regel mit einem Elongieren einher. Die so hergestellte sekundäre Vorform kann zum Ziehen einer Hohlkernfaser bereits ausgelegt und geeignet sein. Optional kann die sekundäre Vorform weiterverarbeitet werden, indem sie beispielsweise elongiert oder ihr zusätzliches Mantelmaterial hinzugefügt wird.

Die oben genannten Aufgaben werden auch gelöst durch ein Verfahren zur Herstellung einer Antiresonanten-Hohlkernfaser aus einer Vorform, hergestellt nach einem der vorhergehenden Ausführungsformen, aufweisend den Schritt

- Weiterverarbeitung der Vorform zu der Antiresonanten-Hohlkernfaser,

wobei die Weiterverarbeitung eine einmalige oder wiederholte Durchführung von einem oder mehreren der folgenden Heißformprozesse umfasst:

    i.) Elongieren,
    ii.) Kollabieren,

iii.) Kollabieren und gleichzeitiges Elongieren,
iv.) Aufkollabieren von zusätzlichem Mantelmaterial,
v.) Aufkollabieren von zusätzlichem Mantelmaterial und anschließendes Elongieren,
vi.) Aufkollabieren von zusätzlichem Mantelmaterial und gleichzeitiges Elongieren.

Ausgangspunkt für die Herstellung der Antiresonanten-Hohlkernfaser ist eine Vorform. Durch einen Heißprozess, insbesondere durch Elongieren der Vorform wird die Antiresonante-Hohlkernfaser erzeugt.

Beim Elongieren wird die Vorform gelängt. Das Elongieren kann maßstäblich erfolgen, so dass sich beispielsweise die Form und Anordnung von Bauteilen oder Bestandteilen der primären Vorform im elongierten Endprodukt widerspiegeln. Beim Elongieren kann die primäre Vorform aber auch nicht-maßstäblich gezogen und ihre Geometrie verändert werden. Beim Kollabieren wird eine Innenbohrung verengt oder Ringspalte zwischen rohrförmigen Bauteil werden geschlossen oder verengt.

Zum Elongieren und Erzeugen der Antiresonanten-Hohlkernfaser aus der Vorform, kann die Vorform senkrecht durch einen Ofen geführt werden. Dabei wird ein unteres Ende der Vorform, aus dem in Form einer Ziehzwiebel die Antiresonante-Hohlkernfaser gezogen wird, auf Ziehtemperatur erwärmt, wobei die gezogene Faser anschließend durch einen der Ziehrichtung entgegengerichteten Gasstrom von der Ziehtemperatur heruntergekühlt wird.

In einer Ausführungsform wird die Antiresonante-Hohlkernfaser mit einem Haftvermittler beschichtet, wobei dieser Schritt während des Ziehprozesses bei der Glasfaserherstellung ausgeführt wird, und anschließend wird in einem zweiten nachfolgenden Schritt die Antiresonante-Hohlkernfaser mit einem Kunststoff beschichtet. Dieser zweite Schritt kann zeitlich entkoppelt vom Ziehprozess der Glasfaserherstellung, ausgeführt werden. Bei dem zur Beschichtung eingesetzten Kunststoff kann es sich um einen oder mehreren der folgenden Stoffe handeln: Polyurethan-Acrylate, Acrylate, Polyolefine, Polyamide (Nylon), Polyether, Polyurethan-Monoacrylate, Fluoralkyl-Methyiacrylate oder Polyimid.

Bestandteile der Vorform umfassen das Hüllrohr und die darin angeordneten Antiresonanzelement-Vorformlinge sowie zusätzliches Mantelmaterial, das beispielsweise in Form eines Überfangzylinders oder mehrerer Überfangzylinder bereitgestellt und auf die Vorform kollabiert wird. Eine Dotierung ermöglich die Anpassung der thermischen Ausdehnungskoeffizienten von benachbarten Vorform-Bestandteilen, um Spannungen zu vermeiden oder zu vermindern. Als die Viskosität von Quarzglas absenkende Dotierstoffe kommen vorzugsweise Fluor, Chlor und/oder Hydroxylgruppen zum Einsatz. Die Dotierung kann auch dazu eingesetzt werden, die thermische Stabilität eines Bestandteils zu Gunsten der Stabilität eines benachbarten Bestandteils zu verringern.

Eine Ausführungsform ist dadurch gekennzeichnet, dass beim Elongieren einzelner Bestandteile zu einer fertigen Vorform im Kernbereich ein relativer Innendruck (ein Unterdruck gegenüber dem umgebenden Atmosphärendruck) im Bereich zwischen -10 bis -300 mbar, insbesondere -50 bis -250 mbar eingestellt wird. Dieses Druckfenster stellt sicher, dass das OD/ID Verhältnis (Verhältnis Außendurchmesser zu Innendurchmesser des Hüllrohrs) im Rahmen des Elongieren nicht zu klein wird.

Eine Ausführungsform ist dadurch gekennzeichnet, dass beim Elongieren der Vorform zu einer Antiresonanten-Hohlkernfaser im Kernbereich ein relativer Innendruck (ein Überdruck gegenüber dem umgebenden Atmosphärendruck) im Bereich zwischen 0,05 mbar-20 mbar eingestellt wird. Bei einem relativen Innendruck von weniger als 0,05 mbar kann es dazu kommen, dass sich die Antiresonanzelement-Vorformlinge zu stark aufblähen. Umgekehrt, kann ein relativer Innendruck von mehr als 20 mbar im Kernbereich dazu führen, dass der Gasdruck innerhalb der Hohlkanäle der Antiresonanzelement-Vorformlinge nicht ausreicht, damit sich diese im Heißformprozess ausreichend aufweiten.

Die Temperatur einer Heizzone beim Heißformprozess sollte möglichst konstant sein. Vorteilhafterweise wird daher beim Heißformprozess ein temperaturgeregeltes Heizelement eingesetzt, dessen Soll-Temperatur auf +/- 0.1°C genau gehalten wird. Dadurch können Temperaturschwankungen im Heißformprozess auf weniger als +/- 0.5°C begrenzt werden.

Bei einer Ausführungsform umfasst das Bereitstellen gemäß Schritt a) ein Anordnen der Antiresonanzelement-Vorformlinge an Soll-Positionen an der Hüllrohr-Innenbohrung, wobei das Anordnen der Antiresonanzelement-Vorformlinge eine Fixierungs-Maßnahme und/oder eine Versiegelungsmaßnahme unter Einsatz einer amorphe SiO2-Partikel enthaltenden Versiegelungs- oder Verbindungsmasse umfasst. Die zum Versiegeln oder Fixieren eingesetzte Versiegelungs- oder Verbindungsmasse enthält SiO2-Partikel, insbesondere enthält zu mindestens 60 Gew.-% SiO2-Partikel, die beispielsweise in einer Dispersionsflüssigkeit aufgenommen sind. Diese Masse wird zwischen den zu verbindenden beziehungsweise zu versiegelnden Flächen aufgetragen und ist beim Einsatz in der Regel pastös. Beim Trocknen bei niedriger Temperatur wird die Dispersionsflüssigkeit teilweise oder vollständig entfernt und die Masse verfestigt. Die Versiegelungs- oder Verbindungsmasse und insbesondere die nach dem Trocknen erhaltene, verfestigte SiO2-haltige Versiegelungs- oder Verbindungsmasse genügt den Anforderungen zur Fixierung und Verdichtung. Die dafür erforderliche niedrige Temperatur unterhalb von 300 °C begünstigt die Einhaltung der Maßhaltigkeit der Vorform und vermeidet thermische Beeinträchtigungen.

Durch Erhitzen auf höhere Temperaturen, beispielsweise beim Elongieren der Vorform zur Hohlkernfaser, ist die Versiegelungs- oder Verbindungsmasse auch geeignet, opakes oder transparentes Glas zu bilden. Dies geschieht durch Sintern oder Verglasen, wobei das Sintern zu opakem Glas vergleichsweise niedrigere Temperaturen und/oder kurze Erhitzungsdauern erfordert als ein Verglasen bis zur vollständigen Transparenz. Die Versiegelungs- oder Verbindungsmasse kann somit durch Erwärmen verdichtet und durch Erhitzen beim Heißformprozess verglast werden.

Beim Heißformprozess zersetzt sich die Versiegelungs- oder Verbindungsmasse nicht und sie setzt wenig an Verunreinigungen frei. Sie zeichnet sich somit durch thermische Stabilität und Reinheit beim Heißformprozess aus und sie vermeidet Verformungen infolge unterschiedlicher thermischer Ausdehnungskoeffizienten.

Die in der Beschreibung offenbarten Merkmale können für verschiedene Ausgestaltungsformen der beanspruchten Erfindung sowohl getrennt als auch in beliebiger Kombination miteinander wesentlich sein. Die für die Vorform oder die Antiresonante-Hohlkernfaser offenbarten Merkmale sind auch für das Verfahren offenbart und umgekehrt.

Die Erfindung wird im Folgenden durch Figuren weiter beispielhaft illustriert. Die Erfindung ist nicht auf die Figuren beschränkt.

**Figuren**

Es zeigen

Fig. 1 einen partiellen Längsschnitt durch eine Antiresonante-Hohlkernfaser,

Fig. 2 einen partiellen Querschnitt durch eine Antiresonante-Hohlkernfaser,

Fig. 3 einen partiellen Längsschnitt durch eine erste Ausführungsform der erfindungsgemäßen Vorform,

Fig. 4 einen partiellen Querschnitt durch die erste Ausführungsform der erfindungsgemäßen Vorform,

Fig. 5 einen partiellen Längsschnitt durch eine zweite Ausführungsform der erfindungsgemäßen Vorform,

Fig. 6 einen partiellen Querschnitt durch die zweite Ausführungsform der erfindungsgemäßen Vorform,

Fig. 7 eine Darstellung der erfindungsgemäßen Vorform mit den Einheitsvolumen,

Fig. 8 ein Flussdiagramm eines Verfahrens zur Herstellung einer Vorform, und

Fig. 9 ein Flussdiagramm eines Verfahrens zur Herstellung einer Antiresonanten-Hohlkernfaser.

**Beschreibung der Figuren**

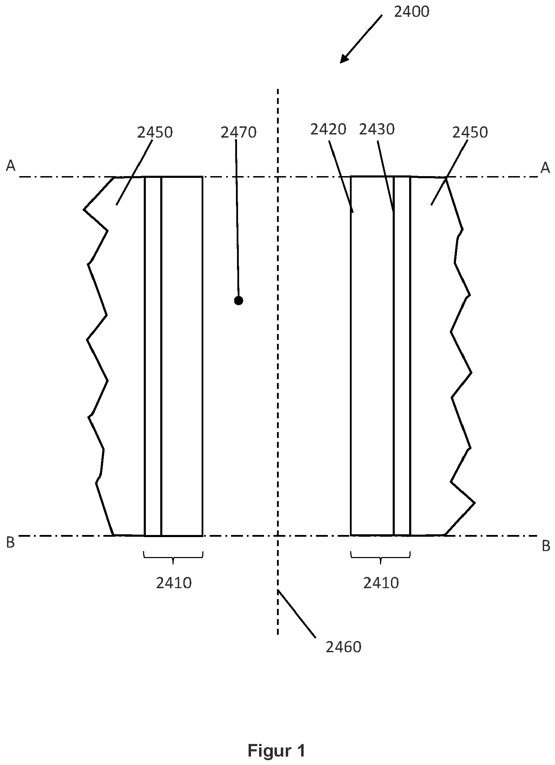

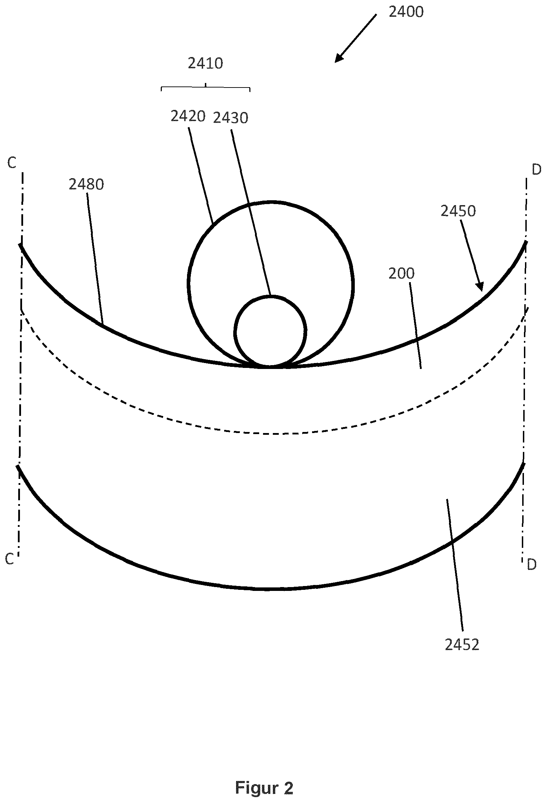

**Figur 1** zeigt einen Längsschnitt durch eine Antiresonante-Hohlkernfaser 2400. **Figur 2** zeigt einen Querschnitt, der in Figur 1 dargestellten Antiresonanten-Hohlkernfaser 2400. Dargestellt ist ein Abschnitt der Antiresonanten-Hohlkernfaser 2400 zwischen 2 Schnittlinien A-A und B-B. Die Antiresonante-Hohlkernfaser 2400 weist einen Mantel 2450 auf. Der Mantel 2450 besteht in der dargestellten Ausführungsform der Antiresonanten-Hohlkernfaser 2400 aus einem elongierten Hüllenrohr 200 und einem elongierten Mantelmaterial 2452. Da in der dargestellten Ausführungsform das Mantelmaterial 2452 und das Hüllrohrmaterial 200 materialidentisch ausgestaltet sind, ist der Übergang zwischen den beiden Materialien in Figur 2 nur mit einer Strichlinie markiert. Die Antiresonante-Hohlkernfaser 2400 weist einen hohlen Kern 2470 auf. Durch den hohlen Kern 2470 kann eine elektromagnetische Welle propagieren. Innerhalb des hohlen Kerns 2470 sind in der dargestellten Ausführungsform zwei Antiresonanzelemente 2410 angeordnet. Jene sind stoffschlüssig mit einer Innenfläche 2480 des Mantels 2450 verbunden. Die Antiresonanzelemente 2410 weisen ein ARE-Faser-Außenrohr 2420 und ein ARE-Faser-Innenrohr 2430 auf. Das ARE-Faser-Innenrohr 2430 ist in dem ARE-Faser-Außenrohr 2420 angeordnet. Die Antiresonanzelemente 2410 sind parallel zu einer Längsachse 2460 der Antiresonanzen-Hohlkernfaser 2400 angeordnet.

**Figur** 2 zeigt einen Querschnitt, der in Figur 1 dargestellten Antiresonanten-Hohlkernfaser 2400. Diese Figur 2 verdeutlicht die Anordnung eines Antiresonanzelementes 2410 auf einer den Hohlkern 2470 begrenzenden Innenfläche 2480. Die Antiresonanzelemente 2410 sind rohrförmig aufgebaut, wobei das ARE-Faser-Innenrohr 2430 stoffschlüssig mit dem ARE-Faser-Außenrohr 2420 verbunden ist.

Das dargestellte ARE-Faser-Innenrohr 2430 und/oder ARE-Faser-Außenrohres 2420 kann teilweise eine Wandstärke im Bereich von 0,2-2 $\mu$m aufweisen. Das dargestellte Mantelrohr 2450 kann einen Außendurchmesser im Bereich von 90-250 mm bei einer Länge von mindestens 1 m aufweisen. Der Innendurchmesser des Hohlkerns 2470 beträgt vorzugsweise 10-50 Millimeter.

Die dargestellte Antiresonante-Hohlkernfaser 2400 ist hergestellt aus einer Vorform 100, welche im Folgenden näher beschreiben wird. Das Herstellen der Antiresonanten-Hohlkernfaser 2400 aus der Vorform 100 erfolgt dabei insbesondere durch ein einmaliges oder wiederholtes Durchführen von einem oder mehreren der folgenden Heißformprozesse: Elongieren 2300, Kollabieren 2100, Aufkollabieren 2200 von zusätzlichem Mantelmaterial.

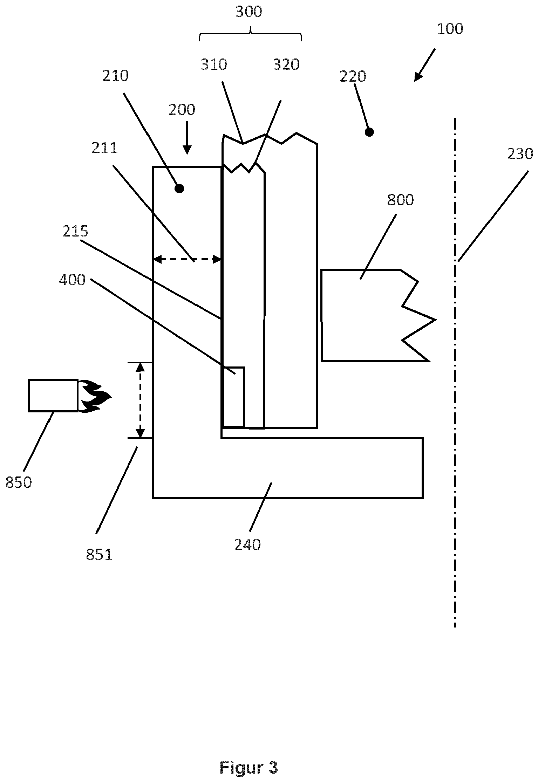

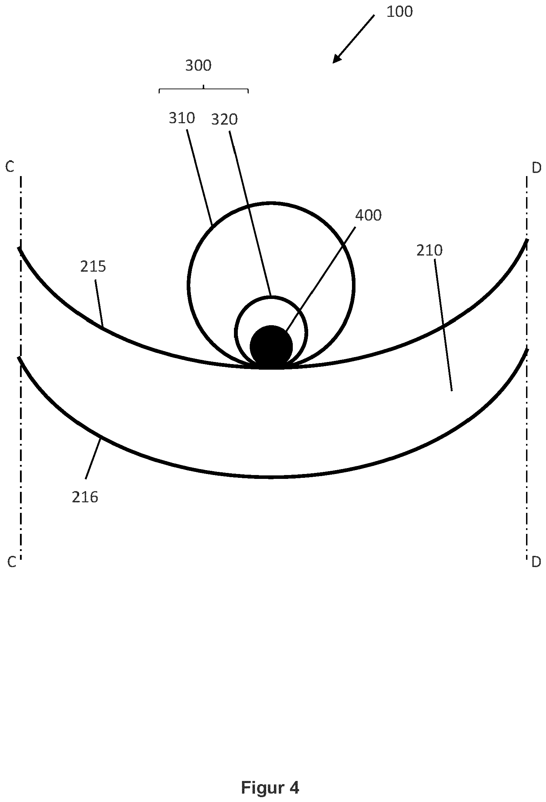

Die **Figur 3 und 4** zeigen einen Ausschnitt einer ersten erfindungsgemäßen Ausführungsform einer erfindungsgemäßen Vorform 100 einer Antiresonanten-Hohlkernfaser 2400. Die Vorform 100 weist ein Hüllrohr 200 auf. Das Hüllrohr 200 ist rohrartig ausgestaltet und umfasst eine Hüllrohr-Wandung 210, welche eine Dicke 211 im Bereich von 20 mm bis 150 mm, insbesondere 30mm bis 130 mm aufweist. An einer Innenseite 215 des Hüllrohres 200 ist ein Antiresonanzelement-Vorformling 300 angeordnet. Dabei stellt der mindestens eine Antiresonanzelement-Vorformling 300 sicher, dass in dem zentralen Hohlkern 2470 der finalen Hohlkernfaser 2400 die Kernmode propagieren kann.

Der Antiresonanzelement-Vorformling 300 umfasst ein ARE-Außenrohr 310 und ein ARE-Innenrohr 320, die beide rohrartig ausgestaltet sind. Das ARE-Außenrohr 310 und/oder das ARE-Innenrohr 320 können eine Wandstärke im Bereich von 0,1-2 mm aufweisen. Das ARE-Innenrohr 320 kann stoffschlüssig mit dem ARE-Außenrohr 310 verbunden werden. Dieser Verbund erfolgt durch ein thermisches Anheften, was insbesondere im Rahmen einer Vorbereitung 1200 einer Anzahl von Antiresonanzelement-Vorformlingen 300 erfolgen kann. Im Rahmen dieses Schrittes der Vorbereitung 1200 können mehrere, miteinander verschachtelte rohrförmige Strukturelemente, wie das ARE-Außenrohr 310 und das ARE-Innenrohr 320, zusammengesetzt werden.

Das thermische Anheften im Rahmen Vorbereiten 1200 kann außerhalb und/oder auch innerhalb des Hüllrohr 200 erfolgt. Wie insbesondere Figur 4 verdeutlicht umfasst ein Antiresonanzelement-Vorformling ein ARE-Außenrohr 310 und ein darin eingesetztes ARE-Innenrohr 320. Das thermische Anheften kann in einer stoffschlüssigen Verbindung des ARE-Innenrohres 320 an einer Innenseite des ARE- Außenrohres 310 resultieren. Dabei liegt eine durch seine rohrartige Form vorgegebene Längsachse des ARE-Innenrohres 320 parallel zu einer durch seine Form vorgegebene Längsachse des ARE-Außenrohres 310. Die Kombination des ARE-Außenrohres 310 und des ARE-Innenrohres 320 bilden insofern ein verschachteltes, rohrförmiges Strukturelement, welches eine eigene Strukturelement-Längsachse aufweist.

Die Form des Hüllrohr 200 ist rohr- und/oder zylinderartig und weist eine Hüllrohr-Längsachse 230 auf. Innenseitig ist das Hüllrohr 200 mit einer Hüllrohr-Innenbohrung 220 versehen. Entlang der Längsachse 230 erstreckt sich eine Hüllrohr-Wandung 210, die durch eine Innenseite 215 und einer Außenseite 216 begrenzt wird. Das Hüllrohr 200 kann zumindest wenigstens partiell durch einen Hüllrohr Abschluss 214 endseitig verschlossen werden.

In das in einem ersten Schritt bereitgestellte 1100 Hüllrohr 200 wird in einem weiteren Schritt der mindestens eine Antiresonanzelement-Vorformling 300 angeordnet 1300. Anschließend erfolgt ein thermisches Fixieren 1500 des mindestens einen Antiresonanzelement-Vorformlings 300 an der Hüllrohr-Wandung 210 durch einen Wärmeeintrag. Zur Erzeugung dieses Wärmeeintrages kann eine Wärmequelle 850, wie etwa ein Wasserstoffbrenner, dienen, welche einen Bereich 851 der Hüllrohr-Wandung 210 thermisch erhitzt. Ziel des thermischen Erhitzens ist ein stoffschlüssiger Verbund des Antiresonanzelement-Vorformlings 300 mit der Innenseite 215. In einer Ausführungsform erfolgt nur ein partieller stoffschlüssiger Verbund des Antiresonanzelement-Vorformlings 300 mit dem Hüllrohr 200 im erwärmten Bereich 851. Folglich wird der mindestens eine Antiresonanzelement-Vorformling 300 nur punktuell mit dem Hüllrohr 200 verbunden. Dieser punktuelle Verbund kann an 5, insbesondere 3, insbesondere 2 Stellen entlang der Länge des Antiresonanzelement-Vorformlings 300 erfolgen.

In der dargestellten Ausführungsform weist das Hüllrohr 200 und der mindestens eine Antiresonanzelement-Vorformling 300 ein Material auf, das für ein Arbeitslicht der optischen Faser transparent ist, beispielsweise Glas, insbesondere dotiertes oder nicht dotiertes Quarzglas (SiO2). In einer Ausführungsform bestehen das Hüllrohr 200 und der Antiresonanzelement-Vorformling 300 aus dotiertem oder nicht dotiertem Quarzglas (SiO2).

Das offenbarte Verfahren umfasst ein derartiges Einbringen 1400 von jeweils einem Kontaktelement 400 in den mindestens einen Antiresonanzelement-Vorformling 300, dass das Kontaktelement 400 in Schritt d) die wärmeaufnehmende Masse des Antiresonanzelement-Vorformlings 300 erhöht, um beim thermischen Fixieren 1500 einen Wärmefluss aus dem Hüllrohr 200 in den Antiresonanzelement-Vorformling 300 zu verlangsamen und/oder einen Anstieg der Temperatur des Antiresonanzelement-Vorformling 300, ausgelöst durch den Wärmefluss, zu verlangsamen.

Das Kontaktelement 400 dient dazu, die wärmeaufnehmende Masse des Antiresonanzelement-Vorformlings 300 zu erhöhen. Wie Figur 3 zeigt, geht von der Wärmequelle 850 ein Wärmefluss in Richtung der Wandung 210 des Hüllrohres 200 aus. In der Figur 3 ist die Wärmequelle 850 im Wesentlichen rechtwinklig zu der Hüllrohr-Wandung angeordnet. Alternativ kann die Wärmequelle 850 auch die Stirnfläche des Hüllrohrs in der Nähe der Antiresonanzelement-Vorformlinge erhitzen. Besagter Wärmefluss führt zu einem Temperaturanstieg der Hüllrohr-Wandung 200, welcher final auch den Antiresonanzelement-Vorformling 300 erreicht. Es besteht die Gefahr, dass die erreichte Temperatur an der Innenseite 215 derart groß wird und/oder die Geschwindigkeit des Temperaturanstieges derart groß ist, dass es zu einer thermischen Schädigung des mindestens einen Antiresonanzelement-Vorformlings 300 kommt und/oder der mindestens eine Antiresonanzelement-Vorformling 300 nicht präzise und/oder spannungsfrei an der Innenseite 215 der Hüllrohr-Wandung 210 fixiert wird. Ein nicht spannungsfreies und/oder präzises Fixieren des Antiresonanzelement-Vorformlings 300 führt aber dazu, dass die resultierende Antiresonanz Hohlkernfaser 2400 nicht die benötigten Dämpfungseigenschaften aufweist.

Um in einem industriellen Prozess ein zuverlässiges und reproduzierbares Fixieren des Antiresonanzelement-Vorformlings 300 an der Hüllrohr-Wandung 210 sicherzustellen, ist die Nutzung des Kontaktelement 400 vorgesehen, welches die wärmeaufnehmende Masse des Antiresonanzelement-Vorformlings 300 erhöht. Durch das Kontaktelement 400 wird der Antiresonanzelement-Vorformling 300 in jenem Bereich thermisch träger, in dem der stoffschlüssige Verbund von Antiresonanzelement-Vorformling 300 und Hüllrohr-Wandung 210 stattfinden soll.

Bei der Ausgestaltung des Kontaktelements 400 sind zwei einander widerstrebende Eigenschaften auszugleichen.

i.) Einerseits führt ein möglichst massereiches Kontaktelement 400 zu einer deutlichen Erhöhung der wärmeaufnehmenden Masse des Antiresonanzelement-Vorformlings 300 und stellt insofern sicher, dass die Gefahr einer thermischen Zerstörung oder Deformation des Antiresonanzelement-Vorformlings 300 reduziert wird. Insofern scheint ein möglichst großes und massereiches Kontaktelement 400 vorteilhaft.

ii.) Andererseits kann bei einem zu massereichen Kontaktelement 400 das Material des Antiresonanzelement-Vorformlings 300 nicht ausreichend erhitzt werden, um eine stoffschlüssige Verbindung mit der Hüllrohr-Wandung 210 sicherzustellen. Durch eine entsprechende Erhöhung des Wärmeeintrag durch die Wärmequelle 850 lässt sich der stoffschlüssige Verbund im Notfall sicherstellen. Allerdings kann der dann notwendige Wärmeeintrag durch die Wärmequelle 850 derart groß sein, dass dieser zu einer Zerstörung der Hüllrohr-Wandung 210 im Bereich 851 führt. Insofern scheint ein möglichst kleines und massearmes Kontaktelement 400 vorteilhaft. Zusätzlich oder alternativ besteht bei einem zu groß gewählten Kontaktelement die Gefahr, dass der Antiresonanz-Vorformling 300 während des thermischen Fixierens 1500 verschlossen wird. Dadurch könnte sich bei der Weiterverarbeitung ein Druck im Antiresonanz-Vorformling 300 aufbauen, der zu einer ungewollten Deformation und/oder Expansion des Antiresonanz-Vorformlings 300 führt.

Insofern bedarf es einer ausgewogenen Dimensionierung des Kontaktelements 400.

Im Rahmen des Schrittes d) erfolgt ein Anordnen 1300 des mindestens einen Antiresonanzelement-Vorformlinge 300 an einer Innenseite 215 der Hüllrohr-Wandung 210. Dieses Anordnen 1300 kann in einer Ausführungsform durch kraft- und/oder formschlüssige Klemmelemente erfolgen. Die Klemmelemente können dabei insbesondere Endseitig die Antiresonanzelement-Vorformlinge 300 in dem Hüllrohr 200 halten. In einer weiteren Ausführungsform ist in dem Hüllrohr 200 eine Positionierungsschablone 800 angeordnet, die kraft- und/oder formschlüssig den mindestens einen Antiresonanzelement-Vorformling 300 in einer vorgegebenen Position hält. So kann das Anordnen 1300 der Antiresonanzelement-Vorformlinge 300 an der Innenseite 215 der Hüllrohr-Innenbohrung 220 ein Anordnen der Antiresonanzelement-Vorformlinge 300 an Soll-Positionen der Innenseite der Hüllrohr-Wandung 210 umfasst, wobei das Anordnen 1300 der Antiresonanzelement-Vorformlinge 300 mittels einer in die Hüllrohr-Innenbohrung einzuführenden Positionierungsschablone 800 erfolgt, die Halteelemente zur Positionierung der Antiresonanzelement-Vorformlinge 300 an den Soll-Positionen aufweist. Durch ansprechende Wahl der Geometrie und Materialien kann mithilfe der Positionierungsschablone 800 eine reproduzierbare Genauigkeit bei der Positionierung der Antiresonanzelement-Vorformlinge 300 von +/- 5 mm erzielt werden. Als vorteilhaft haben sich Positionierungsschablonen 800 erwiesen, die aus Graphit bestehen.

Das thermische Fixieren 1500 in Schritt d) kann in einer Ausführungsform dadurch gekennzeichnet sein, dass der Schritt e) die sequenziellen Schritte umfasst:

/A-1./ Verbinden des Kontaktelement 400 mit dem Antiresonanzelement-Vorformling 300,
/A-2./ Verbinden des Antiresonanzelement-Vorformlings 300 am Hüllrohr 200.

Alternativ oder zusätzlich kann das thermische Fixieren 1500 in Schritt d) dadurch gekennzeichnet sein, dass der Schritt e) die sequenziellen Schritte umfasst:

/B-1./ Wärmeeintrag auf die Anordnung aus Antiresonanzelement-Vorformling 300 und Kontaktelement 400,
/B-2./ Erstes Verbinden des Kontaktelements 400 mit dem Antiresonanzelement-Vorformling 300 durch einen ersten Anteil des Wärmeeintrags,
/B-3./ Zweites Verbinden des Antiresonanzelement-Vorformlings 300 mit dem Hüllrohr 200 durch einen zweiten Anteil des Wärmeeintrags.

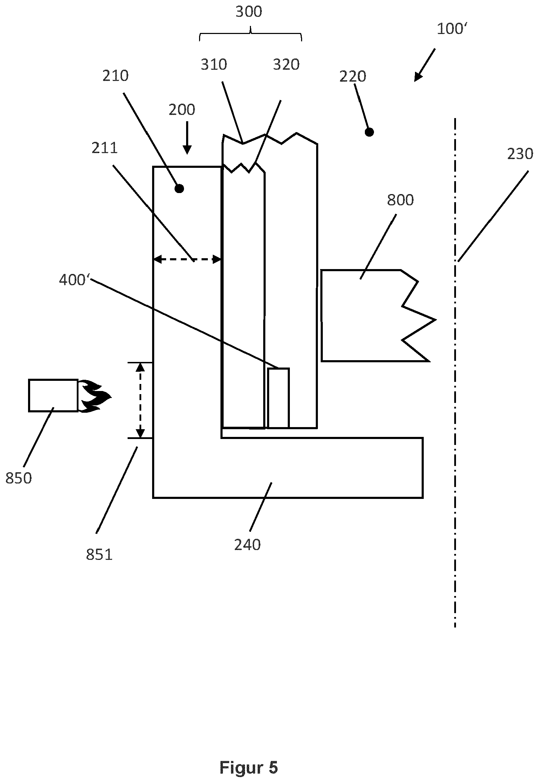

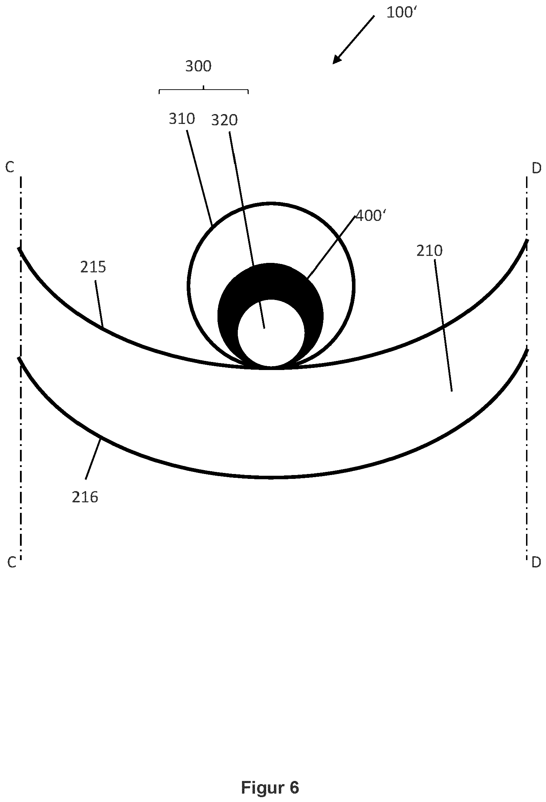

Die **Figuren 5** und **6** zeigen eine Ausführungsform der Vorform 100', die mit dem offenbarten Verfahren hergestellt wird. Die Ausführungsform gemäß Figur 5 und 6 stimmt weitgehend mit der vorstehend beschriebenen und in Figur 3 und 4 dargestellten Ausführungsform überein, so dass zur Vermeidung von Wiederholungen auf die vorstehende Beschreibung verwiesen wird. Eine Struktur, die aus der Beschreibung von Figur 3 und 4 wiederholt wird, weist dasselbe Bezugszeichen auf. Abwandlungen einer gegenüber der in Figur 3 und 4 gezeigten Struktur weisen dasselbe Bezugszeichen mit einem Apostroph (') auf.

Die in den Figuren 5 und 6 dargestellte Vorform 100' unterscheidet sich von der in Figur 3 und 4 dargestellten Ausführungsform durch die Anordnung des Kontaktelements 400. Die Vorform 100' weist ein Kontaktelement 400 auf, welches in dem ARE-Außenrohr 310 angeordnet ist. Im Gegensatz dazu war bei der in Figuren 4 und 5 dargestellten Ausführungsform das Kontaktelement 400 in dem ARE-Innenrohr 320 angeordnet. Wie insbesondere die Figur 6 verdeutlicht, kann das Kontaktelement 400 eine Halbmond-förmige Struktur aufweisen und das ARE-Innenrohr 320 zumindest bereichsweise umgreifen. Durch diese Art der Ausgestaltung ist ein optimierter Abfluss der Wärme aus der Innenseite 215 der Hüllrohr-Wandung 210 in das Kontaktelement 400 gewährleistet. Gleichzeitig erreicht aber genug Wärme eine Kontaktstelle zwischen einer Außenseite des Antiresonanzelement-Vorformlings 300 und der Innenseite 215 der Hüllrohr-Wandung 210, um einen stoffschlüssigen Verbund zu erzielen.

Durch entsprechende Dimensionierung des Kontaktelements 400 wird sichergestellt, dass im Rahmen des thermischen Fixieren 1500 die geometrische Abmessung des Antiresonanzelement-Vorformlings 300 um weniger als 10 %, insbesondere weniger als 5 %, insbesondere weniger als 2 %, insbesondere weniger als 1 % verändert wird. Unter geometrische Abmessung wird wenigstens eine der folgenden Größen verstanden: Radius des ARE-Innenrohres 320, Radius des ARE-Außenrohres 310, Wandstärke des ARE-Innenrohres 320, Wandstärke des ARE-Außenrohres 310, Abweichung vom einer idealen Kreisgeometrie durch das ARE-Innenrohr, Abweichung von einer idealen Kreisgeometrie durch das ARE-Außenrohr 310, Kreisfläche des ARE-Innenrohres 320 und Kreisfläche des ARE-Außenrohrs 310.

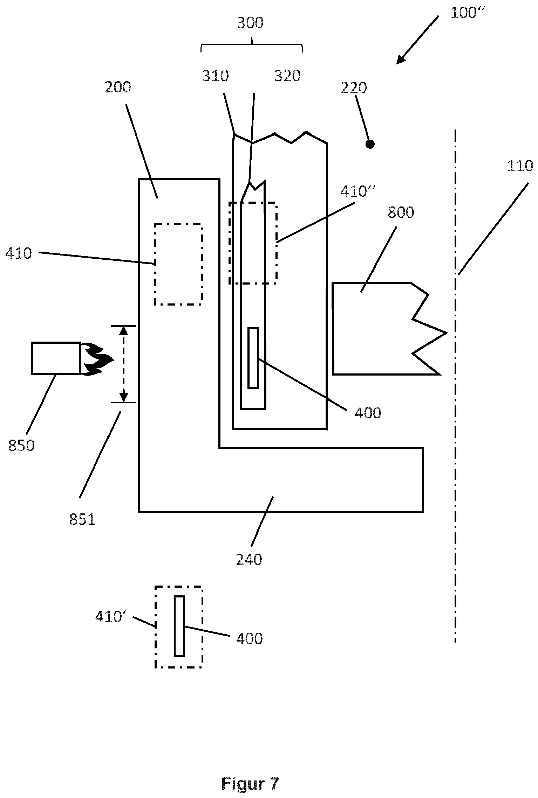

Die **Figur 7** zeigt eine Ausführungsform der Vorform 100", die mit dem offenbarten Verfahren hergestellt wird. Das Ausführungsform gemäß Figur 7 stimmt weitgehend mit der vorstehend beschriebenen und in Figur 3 und 4 dargestellten Ausführungsform überein, so dass zur Vermeidung von Wiederholungen auf die vorstehende Beschreibung verwiesen wird. Eine Struktur, die aus der Beschreibung von Figur 3 und 4 wiederholt wird, weist dasselbe Bezugszeichen auf. Abwandlungen einer gegenüber der in Figur 3 und 4 gezeigten Struktur weisen dasselbe Bezugszeichen mit zwei Apostroph (") auf.

Die in Figur 7 gezeigte Ausführungsform der Vorform 100" ist dadurch gekennzeichnet, dass das Kontaktelement 400 derart ausgestallte ist, dass gilt

C_Hüllrohres > C_Kontaktelement > C_Antiresonanzelement-Vorformling

wobei

- C_Hüllrohr eine über ein Einheitsvolumen 410 gemittelte Wärmekapazität des Vollmaterials des Hüllrohres 200 ist,
- C_Kontaktelement eine über das Einheitsvolumen 410" gemittelte Wärmekapazität des Kontaktelements 400 und der umgebenden Luft ist,
- C_Antiresonanzelement-Vorformling eine über das Einheitsvolumen 410" gemittelte Wärmekapazität des Antiresonanzelement-Vorformlings 300 und der umgebenden Luft ist,

und wobei das Einheitsvolumen 25 vol.-% größer ist als ein Volumen des Kontaktelements 400.

Die gemittelte Wärmekapazität "C_Hüllrohr" des Hüllrohrs 200 ergibt sich durch ein Mitteln über ein Einheitsvolumen 410 des Vollmaterials des Hüllrohrs 200. Insofern entspricht die gemittelte Wärmekapazität der spezifischen Wärmekapazität des Materials aus welchem das Hüllrohr 200 aufgebaut ist. Als Einheitsvolumen wird dabei ein Volumen bezeichnet welches 25 vol.-% größer ist als das Volumen des Kontaktelements 400.

Die gemittelte Wärmekapazität "C_Kontaktelement" des Kontaktelements 400 ergibt sich aus einer Mitteilung über ein Einheitsvolumen 410' welches 25 vol.-% größer ist als ein Volumen des Kontaktelements 400. Insofern findet ein Mitteln über die spezifische Wärmekapazität des Materials, aus welchem das Kontaktelement 400 aufgebaut ist, und der es umgebenden Luft statt (unter Normalbedingungen gemäß DIN 1343).

Zur Ermittlung der gemittelten Wärmekapazität "C_Antiresonanzelement-Vorformling" des Antiresonanzelement-Vorformlings 300 sollte das Einheitsvolumen 410" derart ausgestaltet werden, dass es jenen stoffschlüssig mit der Innenwandung des Hüllrohrs 200 zu verbindenden Abschnitt umfasst. In Figur 7 ist dieses derart dargestellt, dass das Einheitsvolumen 410" zylinderförmigen ist und sowohl Teile des ARE-Innenrohres 320 als auch des ARE-Außenrohres 310 umschließt. Die Längsachse des Einheitsvolumen 410" ist dabei parallel zu einer gedachten Längsachse des Antiresonanzelement-Vorformlings 300 ausgerichtet. Die gemittelte Wärmekapazität des Vorformlings 300 ergibt sich durch eine Mittelung über Teile der rohrartigen Struktur 310,320, die den Antiresonanzelement-Vorformling 300 bilden, sowie die mit im Einheitsvolumen 410" umfasste Luft (unter Normalbedingungen gemäß DIN 1343).

Das Einheitsvolumen 410,410',410" kann so gewählt sein, dass es in seiner Form im Wesentlichen die äußere Form des Kontaktelements 400 widerspiegelt und lediglich in seinen Dimensionen derart vergrößert ist, dass es um 25 vol.-% größer ist als das Volumen des Kontaktelements 400. Bei einem zylinderartig ausgestalteten Kontaktelement 400 kann das Einheitsvolumen 410,410', 410" ebenfalls zylinderartig ausgestaltet sein. Ein im Vergleich zum Kontaktelement 400 vergrößerter Durchmesser sowie eine größere Länge erzielen das um 25 vol.-% größer Volumen.

In einer Ausführungsform weist das Kontaktelement 400 ein Material auf, das für ein Arbeitslicht der optischen Faser transparent ist, beispielsweise Glas, insbesondere dotiertes oder nicht dotiertes Quarzglas (SiO2). In einer Ausführungsform bestehen das Kontaktelement 400 aus einem Material, das für ein Arbeitslicht der optischen Faser transparent ist, beispielsweise Glas, insbesondere dotiertes oder nicht dotiertes Quarzglas (SiO2).

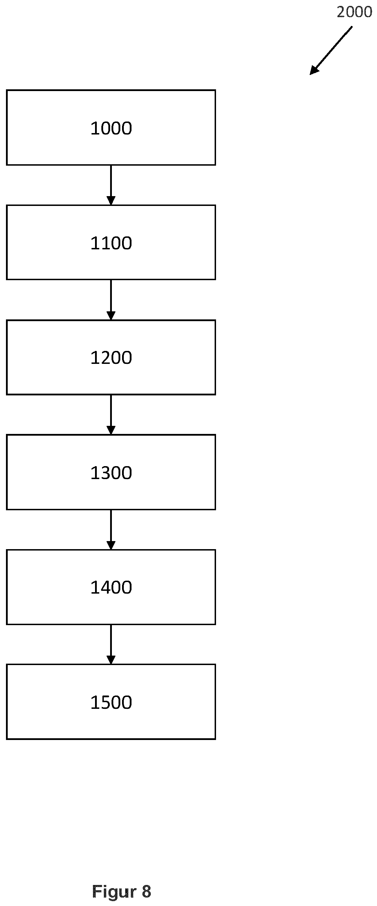

Die **Figur 8** zeigt eine Ausführungsform eines Verfahrens 2000 zur Herstellung einer Vorform 100 einer Antiresonanten-Hohlkernfaser 2400, mit den Verfahrensschritten

a. Bereitstellen 1000 eines Hüllrohres 200, dass eine Hüllrohr-Innenbohrung 220 und eine Hüllrohr-Längsachse 230 aufweist, entlang der sich eine von einer Innenseite 215 und einer Außenseite 216 begrenzte Hüllrohr-Wandung 210 erstreckt,

b. Vorbereiten 1200 einer Anzahl von Antiresonanzelement-Vorformlingen 300, die aus mehreren, miteinander verschachtelten rohrförmigen Strukturelementen zusammengesetzt sind, umfassend ein ARE-Außenrohr 310 und ein darin eingesetztes ARE-Innenrohr 320, wobei die Strukturelemente eine Strukturelemente-Längsachse aufweisen,

c. Anordnen 1300 der Antiresonanzelement-Vorformlinge 300 an der Innenseite der Hüllrohr-Wandung 210, und

d. Thermisches Fixieren 1500 der Antiresonanzelement-Vorformlinge 300 an der Hüllrohr-Wandung 210 durch Wärmeintrag.

Dabei ist vorgesehen, dass das Verfahren den Schritt aufweist

e. derartiges Einbringen 1400 von jeweils einem Kontaktelement 400 in mindestens einem Antiresonanzelement-Vorformling 300, dass das Kontaktelement 400 in Schritt d) die wärmeaufnehmende Masse des Antiresonanzelement-Vorformlings 300 erhöht, um beim thermischen Fixieren 1500 einen Wärmefluss Temperaturanstieg aus dem Hüllrohr 200 in den Antiresonanzelement-Vorformling 300 zu verlangsamen.

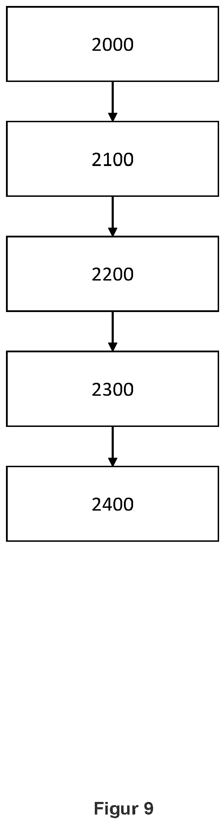

Die **Figur 9** zeigt eine Ausführungsform eines Verfahrens zur Herstellung einer Antiresonanten-Hohlkernfaser 2400 aus einer Vorform 100, insbesondere hergestellt nach einem der vorhergehenden Verfahrensschritte 1000 bis 1500, aufweisend den Schritt

• Weiterverarbeitung der Vorform 100 zu der Antiresonanten-Hohlkernfaser 2400,

wobei die Weiterverarbeitung eine einmalige oder wiederholte Durchführung von einem oder mehreren der folgenden Heißformprozesse umfasst:

• Kollabieren 2100,
• Aufkollabieren 2200 von zusätzlichem Mantelmaterial, und
• Elongieren 2300.

Alle in den Ansprüchen, der Beschreibung und in den Figuren angegebenen physikalischen Größen werden, wenn nichts anderes angegeben ist, unter Normalbedingungen gemäß DIN 1343 bestimmt. Die Aussage "unter Normalbedingungen" bezieht sich auf Messungen unter Bedingungen gemäß DIN 1343. Die in den Ansprüchen, der Beschreibung und in den Figuren offenbarten Merkmale können für verschiedene Ausgestaltungsformen der beanspruchten Erfindung sowohl getrennt als auch in beliebiger Kombination miteinander wesentlich sein. Die für die Vorrichtungen, insbesondere Vorform, sekundäre Vorform oder Antiresonante-Hohlkernfaser, offenbarten Merkmale sind auch für das Verfahren offenbart und umgekehrt.

**Bezugszeichen**

100    Vorform einer Antiresonanten-Hohlkernfaser

200    Hüllrohr
210    Hüllrohr-Wandung
211    Dicke der Hüllrohr-Wandung
215    Innenseite der Hüllrohr-Wandung
216    Außenseite der Hüllrohr-Wandung
220    Hüllrohr-Innenbohrung
230    Hüllrohr-Längsachse
240    Hüllrohr-Abschluss

| | |
|---|---|
| 300 | Antiresonanzelement-Vorformling |
| 310 | ARE-Außenrohr |
| 320 | ARE-Innenrohr |
| | |
| 400 | Kontaktelement |
| 410, 410', 410" | Einheitsvolumen |
| | |
| 800 | Positionierungsschablone |
| 850 | Thermische Wärmequelle |
| 851 | Erwärmter Bereich |
| | |
| 1000 | Bereitstellen eines Hüllrohres |
| 1100 | Erstellen eines Hüllrohr-Abschlusses |
| 1200 | Vorbereiten einer Anzahl von Antiresonanzelement-Vorformlingen |
| 1300 | Anordnen der Antiresonanzelement-Vorformlinge |
| 1400 | Einbringen von jeweils einem Kontaktelement |
| 1500 | Thermisches Fixieren der Antiresonanzelement-Vorformlinge |
| | |
| 2000 | Verfahrensschritte 1000 bis 1500 |
| 2100 | Kollabieren |
| 2200 | Aufkollabieren von zusätzlichem Mantelmaterial |
| 2300 | Elongieren |
| 2400 | Antiresonante-Hohlkernfaser |
| 2410 | Antiresonanzelement |
| 2420 | ARE-Außenrohr der Faser |
| 2430 | ARE-Innenrohr der Faser |
| 2450 | Mantel der Antiresonanten-Hohlkernfaser |
| 2452 | Anteil des vormaligen Mantelmaterials am Mantel der Antiresonanten-Hohlkernfaser |
| 2460 | Längsachse der Antiresonanten-Hohlkernfaser |
| 2470 | Hohlkern der Antiresonanten-Hohlkernfaser |
| 2480 | Innenfläche |

**Patentansprüche**

**1.** Verfahren zur Herstellung einer Vorform einer Antiresonanten-Hohlkernfaser (2400), mit den Verfahrensschritten

a) Bereitstellen (1000) eines Hüllrohres (200), das eine Hüllrohr-Innenbohrung (220) und eine Hüllrohr-Längsachse (230) aufweist, entlang der sich eine von einer Innenseite (215) und einer Außenseite (216) begrenzte Hüllrohr-Wandung (210) erstreckt,

b) Vorbereiten (1200) einer Anzahl von Antiresonanzelement-Vorformlingen (300), die aus mehreren, miteinander verschachtelten rohrförmigen Strukturelementen zusammengesetzt sind, umfassend ein ARE-Außenrohr (310) und ein darin eingesetztes ARE-Innenrohr (320), wobei die Strukturelemente eine Strukturelemente-Längsachse aufweisen,

c) Anordnen (1300) der Antiresonanzelement-Vorformlinge (300) an der Innenseite der Hüllrohr-Wandung (210), und

d) Thermisches Fixieren (1500) der Antiresonanzelement-Vorformlinge (300) an der Hüllrohr-Wandung (210) durch Wärmeintrag,

**dadurch gekennzeichnet, dass** das Verfahren den Schritt aufweist

e) derartiges Einbringen (1400) von jeweils einem Kontaktelement (400) in mindestens einem Antiresonanzelement-Vorformling (300), dass das Kontaktelement (400) in Schritt d) die wärmeaufnehmende Masse des Antiresonanzelement-Vorformlings (300) erhöht, um beim thermischen Fixieren (1500) einen Wärmefluss aus dem Hüllrohr (200) in den Antiresonanzelement-Vorformling (300) zu verlangsamen.

**2.** Verfahren nach Anspruch 1 **dadurch gekennzeichnet, dass** der Schritt e) die sequenziellen Schritte umfasst:

/A-1./ Verbinden des Kontaktelements (400) mit dem Antiresonanzelement-Vorformling (300),
/A-2./ Verbinden des Antiresonanzelement-Vorformlings (300) mit dem Hüllrohr (200).

3. Verfahren nach einem der vorhergehenden Ansprüche **dadurch gekennzeichnet, dass** der Schritt e) die sequenziellen Schritte umfasst:

/B-1./ Wärmeeintrag auf die Anordnung aus Antiresonanzelement-Vorformling (300) und Kontaktelement (400),
/B-2./ Erstes Verbinden des Kontaktelements (400) mit dem Antiresonanzelement-Vorformling (300) durch einen ersten Anteil des Wärmeeintrags,
/B-3./ Zweites Verbinden des Antiresonanzelement-Vorformlings (300) mit dem Hüllrohr (200) durch einen zweiten Anteil des Wärmeeintrags.

4. Verfahren nach einem der vorhergehenden Ansprüche **dadurch gekennzeichnet, dass** das Kontaktelement (400) derart ausgestallte ist, dass gilt
C_ Hüllrohres > C_ Kontaktelement > C_ Antiresonanzelement-Vorformling
wobei

• C_ Hüllrohr eine über ein Einheitsvolumen (410,410',410") gemittelte Wärmekapazität des Vollmaterials des Hüllrohres (200) ist,
• C_ Kontaktelement eine über das Einheitsvolumen (410,410',410") gemittelte Wärmekapazität des Kontaktelements (400) und der umgebenden Luft ist,
• C_ Antiresonanzelement-Vorformling eine über das Einheitsvolumen (410,410',410") gemittelte Wärmekapazität des Antiresonanzelement-Vorformlings (300) und der umgebenden Luft ist,

und das Einheitsvolumen 25 Vol.-% größer ist als ein Volumen des Kontaktelements (400).

5. Verfahren nach einem der vorhergehenden Ansprüche **dadurch gekennzeichnet, dass** das thermische Fixieren in Schritt d) mittels eines flammenbasierten Prozesses erfolgt.

6. Verfahren nach einem der vorhergehenden Ansprüche **dadurch gekennzeichnet, dass** das Kontaktelement (400) stabartig ausgestaltet ist, insbesondere dass das Kontaktelement (400)
eine Länge von [5; 50] mm, insbesondere [10; 40] mm, insbesondere [12; 30] mm aufweist und
einen Durchmesser von [0,5; 10] mm, insbesondere [0,7; 7] mm, insbesondere [1; 5] mm aufweist.

7. Verfahren nach einem der vorhergehenden Ansprüche 1 bis 6 **dadurch gekennzeichnet, dass** das Kontaktelement (400) in das ARE-Außenrohr (310) des mindestens einem Antiresonanzelement-Vorformlings (300) eingebracht wird.

8. Verfahren nach einem der vorhergehenden Ansprüche 1 bis 6 **dadurch gekennzeichnet, dass** das Kontaktelement (400) in das ARE-Innenrohr (320) des mindestens einen Antiresonanzelement-Vorformlings (300) eingebracht wird.

9. Verfahren nach einem der vorhergehenden Ansprüche **dadurch gekennzeichnet, dass** das Anordnen der Antiresonanzelement-Vorformlinge (300) an der Innenseite der Hüllrohr-Innenbohrung ein Anordnen der Antiresonanzelement-Vorformlinge (300) an Soll-Positionen der Innenseite der Hüllrohr-Wandung umfasst, wobei das Anordnen der Antiresonanzelement-Vorformlinge (300) mittels einer in die Hüllrohr-Innenbohrung einzuführenden Positionierungsschablone erfolgt, die Halteelemente zur Positionierung der Antiresonanzelement-Vorformlinge (300) an den Soll-Positionen aufweist.

10. Verfahren nach einem der vorhergehenden Ansprüche **dadurch gekennzeichnet, dass** die Hüllrohr-Innenbohrung durch spanende Bearbeitung erzeugt wird, insbesondere durch Bohren, Fräsen, Schleifen, Honen und/oder Polieren.

11. Verfahren nach einem der vorhergehenden Ansprüche **dadurch gekennzeichnet, dass** das Hüllrohr (200) einem Außendurchmesser im Bereich von 65 bis 300 mm, insbesondere 90 bis 250 mm aufweist und insbesondere eine Länge von mindestens 1 m aufweist.

12. Verfahren nach einem der vorhergehenden Ansprüche **dadurch gekennzeichnet, dass** das Verfahren einen Schritt aufweist:

• Erstellen (1100) eines Hüllrohr-Abschlusses (240) durch ein wenigstens partielles Verschließen eines stirnseitigen Endes der Hüllrohr-Innenbohrung (220).

13. Verfahren zur Herstellung einer sekundären Vorform, aus der eine Hohlkernfaser ziehbar ist, aus einer Vorform (100), hergestellt nach einem der vorhergehenden Ansprüche 1 bis 12, aufweisend den Schritt

• Weiterverarbeitung der Vorform (100) zu der sekundären Vorform,

wobei die Weiterverarbeitung eine einmalige oder wiederholte Durchführung von einem oder mehreren der folgenden Heißformprozesse umfasst:

i.) Elongieren (2300),
ii.) Kollabieren (2100),
iii.) Kollabieren (2100) und gleichzeitiges Elongieren (2300),
iv.) Aufkollabieren (2200) von zusätzlichem Mantelmaterial,
v.) Aufkollabieren (2200) von zusätzlichem Mantelmaterial und anschließendes Elongieren (2300),
vi.) Aufkollabieren (2200) von zusätzlichem Mantelmaterial und gleichzeitiges Elongieren (2300).

14. Verfahren zur Herstellung einer Antiresonanten-Hohlkernfaser (2400) aus einer Vorform (100), hergestellt nach einem der vorhergehenden Ansprüche 1 bis 12, aufweisend den Schritt

• Weiterverarbeitung der Vorform (100) zu der Antiresonanten-Hohlkernfaser (2400),

wobei die Weiterverarbeitung eine einmalige oder wiederholte Durchführung von einem oder mehreren der folgenden Heißformprozesse umfasst:

i.) Elongieren (2300),
ii.) Kollabieren (2100),
iii.) Kollabieren (2100) und gleichzeitiges Elongieren (2300),
iv.) Aufkollabieren (2200) von zusätzlichem Mantelmaterial,
v.) Aufkollabieren (2200) von zusätzlichem Mantelmaterial und anschließendes Elongieren (2300),
vi.) Aufkollabieren (2200) von zusätzlichem Mantelmaterial und gleichzeitiges Elongieren (2300).

15. Verfahren nach einem der vorhergehenden Ansprüche 13 oder 14 **dadurch gekennzeichnet, dass** beim Elongieren (2300) im Kernbereich ein relativer Innendruck im Bereich zwischen 0,05 mbar und 20 mbar eingestellt wird.

Figur 1

Figur 2

300

100

310    320

210

200    220    230

211

215    800

400

850

851    240

**Figur 3**

Figur 4

Figur 5

Figur 6

Figur 7

2000

```
┌─────────────────────┐
│        1000         │
└─────────────────────┘
           │
           ▼
┌─────────────────────┐
│        1100         │
└─────────────────────┘
           │
           ▼
┌─────────────────────┐
│        1200         │
└─────────────────────┘
           │
           ▼
┌─────────────────────┐
│        1300         │
└─────────────────────┘
           │
           ▼
┌─────────────────────┐
│        1400         │
└─────────────────────┘
           │
           ▼
┌─────────────────────┐
│        1500         │
└─────────────────────┘
```

**Figur 8**

```
┌─────────────────────────┐
│          2000           │
└─────────────────────────┘
             │
             ▼
┌─────────────────────────┐
│          2100           │
└─────────────────────────┘
             │
             ▼
┌─────────────────────────┐
│          2200           │
└─────────────────────────┘
             │
             ▼
┌─────────────────────────┐
│          2300           │
└─────────────────────────┘
             │
             ▼
┌─────────────────────────┐
│          2400           │
└─────────────────────────┘
```

Figur 9

**Europäisches Patentamt**
**European Patent Office**
**Office européen des brevets**

# EUROPÄISCHER RECHERCHENBERICHT

Nummer der Anmeldung

EP 20 21 2770

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>A | WO 2019/008352 A1 (UNIV SOUTHAMPTON [GB]) 10. Januar 2019 (2019-01-10)<br>* Seite 18, Zeile 33 - Seite 19, Zeile 9; Anspruch 1; Abbildungen 4,14 *<br>* Seite 2, Zeilen 23-31 *<br>----- | 1,4,7-15<br>6 | INV.<br>C03B37/012<br>C03B23/207 |
| X | GB 2 566 466 A (UNIV SOUTHAMPTON [GB]) 20. März 2019 (2019-03-20)<br>* Seite 19, Zeilen 6-15; Abbildung 14b *<br>* Seite 14, Zeile 28 - Seite 15, Zeile 12 *<br>----- | 1-5,9-15 | |
| X | HABIB MD. SELIM ET AL: "Single-mode, low loss hollow-core anti-resonant fiber designs",<br>OPTICS EXPRESS,<br>Bd. 27, Nr. 4,<br>18. Februar 2019 (2019-02-18), Seite 3824, XP055799349,<br>US<br>ISSN: 2161-2072, DOI: 10.1364/OE.27.003824<br>* Seite 3826, "2. Fiber geometry"; Abbildung 1b *<br>----- | 1-7,9-15 | |
| A | A F KOSOLAPOV ET AL: "Hollow-core revolver fibre with a double-capillary reflective cladding",<br>QUANTUM ELECTRONICS.,<br>Bd. 46, Nr. 3, 29. März 2016 (2016-03-29), Seiten 267-270, XP055502520,<br>GB<br>ISSN: 1063-7818, DOI: 10.1070/QEL15972<br>* Seite 268; Abbildung 2 *<br>----- | 1-15 | |

RECHERCHIERTE SACHGEBIETE (IPC)

C03B

Der vorliegende Recherchenbericht wurde für alle Patentansprüche erstellt

| Recherchenort | Abschlußdatum der Recherche | Prüfer |
|---|---|---|
| Den Haag | 28. April 2021 | Creux, Sophie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 2770

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-04-2021

| Im Recherchenbericht angeführtes Patentdokument | Datum der Veröffentlichung | Mitglied(er) der Patentfamilie | | Datum der Veröffentlichung |
|---|---|---|---|---|
| WO 2019008352 A1 | 10-01-2019 | CN | 110831906 A | 21-02-2020 |
| | | EP | 3649090 A1 | 13-05-2020 |
| | | JP | 2020525391 A | 27-08-2020 |
| | | US | 2020156987 A1 | 21-05-2020 |
| | | WO | 2019008352 A1 | 10-01-2019 |
| GB 2566466 A | 20-03-2019 | CN | 111095059 A | 01-05-2020 |
| | | EP | 3682273 A1 | 22-07-2020 |
| | | GB | 2566466 A | 20-03-2019 |
| | | JP | 2020533264 A | 19-11-2020 |
| | | US | 2020278491 A1 | 03-09-2020 |
| | | WO | 2019053412 A1 | 21-03-2019 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3136143 A1

- WO 2018169487 A1

**In der Beschreibung aufgeführte Nicht-Patentliteratur**

- **FRANCESCO POLETTI.** Nested antiresonant node-less hollow core fiber. *Optics Express,* 2014, vol. 22 (20